Europäisches Patentamt

European Patent Office

Office européen des brevets

(19)

(11) **EP 1 657 923 A1**

(12) **EUROPEAN PATENT APPLICATION**
published in accordance with Art. 158(3) EPC

(43) Date of publication:
**17.05.2006 Bulletin 2006/20**

(51) Int Cl.:
*H04N 5/91* (1980.01)

(21) Application number: **05720438.0**

(22) Date of filing: **03.03.2005**

(86) International application number:
**PCT/JP2005/004167**

(87) International publication number:
**WO 2005/086478 (15.09.2005 Gazette 2005/37)**

(84) Designated Contracting States:
**AT BE BG CH CY CZ DE DK EE ES FI FR GB GR HU IE IS IT LI LT LU MC NL PL PT RO SE SI SK TR**

(30) Priority: **04.03.2004 JP 2004060004**
**16.03.2004 JP 2004074298**

(71) Applicant: **SEIKO EPSON CORPORATION**
**Shinjuku-ku,**
**Tokyo 163-0811 (JP)**

(72) Inventors:
• **Hosoda, Tatsuya**
**Suwa-shi,**
**Nagano 3928502 (JP)**
• **Kuwata, Naoki**
**Suwa-shi,**
**Nagano 3928502 (JP)**
• **Shinozaki, Junichiro**
**Suwa-shi,**
**Nagano 3928502 (JP)**
• **Mukaiyama, Fumiaki**
**Suwa-shi,**
**Nagano 3928502 (JP)**

(74) Representative: **Winter, Brandl, Fürniss, Hübner Röss, Kaiser,**
**Polte Partnerschaft Patent- und Rechtsanwaltskanzlei**
**Alois-Steinecker-Strasse 22**
**85354 Freising (DE)**

(54) **MOVING IMAGE DATA PROCESSING**

(57) This invention provides a moving picture data processing method for extracting a portion of moving picture data from moving picture data. The method comprises: a frame picture evaluation step of evaluating each of a plurality of frame picture data included in the moving picture data on a basis of a specific condition, for generating first picture evaluation values depending on the evaluations; and a moving picture data extraction step of extracting moving picture data including a plurality of frame picture data that meet a specific condition, in response to the first picture evaluation values.

**Fig.5**

EP 1 657 923 A1

**Description**

TECHNICAL FIELD

The present invention relates to technology for automatically generating digest moving picture data from moving picture data.

BACKGROUND ART

In recent years, in association with the popularization of video cameras, shooting photographs with video cameras has become common. At the same time, there has arisen a need to ascertain simply in a short time content of moving picture data shot ranging over an extended period. Accordingly, there has been proposed technology for generating condensed moving picture data, digest moving picture, as condensed information of moving picture data.

For example, in Japanese Unexamined Patent Application 2002-142189, moving picture data is divided into a multiplicity of scenes, an evaluation value is obtained for each scene, and scenes with high evaluation values are stitched together, to generate condensed moving picture data. In Patent Citation 1, the evaluation value is calculated on the basis of brightness of frame pictures in a scene, number or position of objects in frame pictures, audio, or the like.

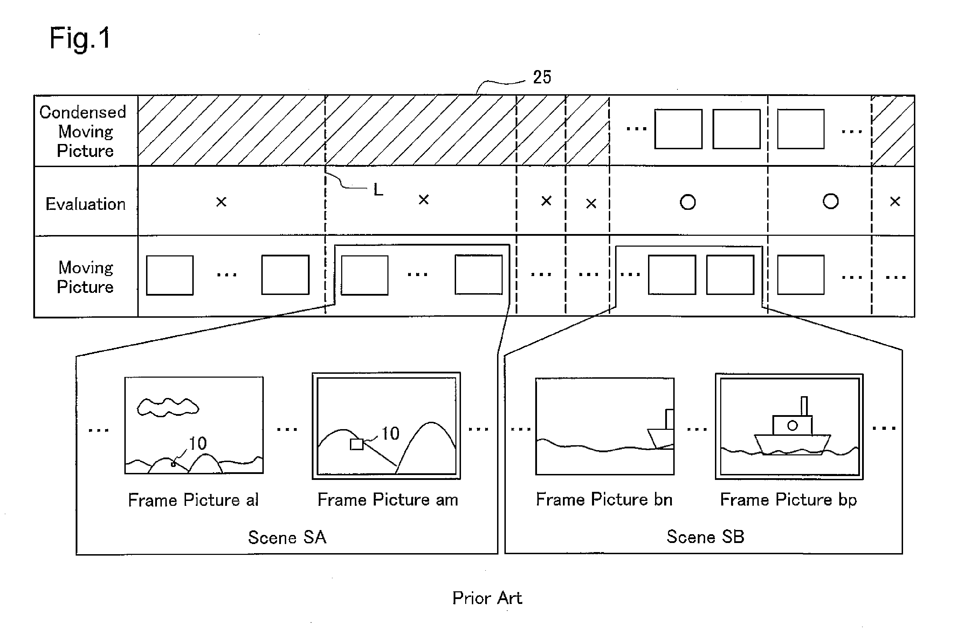

FIG. 1 is an illustration depicting generation of condensed moving picture data in Patent Citation 1. The third row of a chart 25 shows frame pictures that make up moving picture data targeted for generating condensed moving picture data. The content of the frame pictures has been omitted for simplicity. As a result of dividing the moving picture data into scenes, dotted lines L are shown at breaks between the scenes of the moving picture data.

Below the chart 25 of FIG. 1 are shown a frame picture a1 and a frame picture am, as well as a frame picture bn and a frame picture bp, which are enlarged representations of typical frames pictures of a scene SA and a scene SB, respectively. The scene SA is a scene taken of a landscape, such as mountains and sky or the like, while the scene SB is a scene taken of a ship crossing. Each scene is composed of frame pictures which are somewhat consecutive in terms of time and content.

The second row of chart 25 shows evaluation values determined for each scene on the basis of calculating evaluation values. Where the evaluation value is "O", it indicates that scene is suitable as condensed moving picture data, and where it is "X" it indicates that the scene is unsuitable as condensed moving picture data. The first row of the chart 25 shows the frame pictures of the condensed moving picture data stitched together from scenes with "O" evaluations.

However, with conventional condensed moving picture data of this kind, since the evaluation values are obtained in scene units, it sometimes happened that frame pictures suitable for the condensed moving picture were lost, or unsuitable frames were included.

For example, frame am is a frame picture shot as a result of the video camera photographer performing a zoom-up operation in order to shoot a building 10. For the photographer, the frame picture has a high level of importance, and yet it is lost from the condensed moving picture. The frame picture bn, on the other hand, is a picture of a relatively low level importance showing only the bow of the ship, but is nevertheless included in the condensed moving picture.

DISCLOSURE OF THE INVENTION

The present invention was made for the purpose of addressing the drawbacks discussed above, and has as an object to provide technology for effectively utilizing frame picture data of moving picture data to manage generation of a condensed moving picture.

To address the problem, the invention provides a moving picture data processing method for extracting a portion of moving picture data from moving picture data. This method comprises a frame picture evaluation step wherein each of a plurality of frames of data included in the moving picture data is evaluated on the basis of a specific condition, and a first picture evaluation value is generated depending on the evaluation; and a moving picture data extraction step wherein moving picture data that includes a plurality of frames of picture data that meet the specific condition is extracted.

In the moving picture data method of the present invention, moving picture data is evaluated on the basis of each frame of picture data, whereby there can be generated condensed moving picture data composed of frames of picture data that are appropriate for a condensed moving picture.

The moving picture processing device of one embodiment of the invention is a moving picture processing device for generating, from moving picture data composed of a plurality of chronologically consecutive frames of picture data, condensed moving picture data that summarizes the content thereof, the device comprising:

an acquiring portion for acquiring the moving picture data;
a calculating portion for calculating, for each frame of picture data, an evaluation value that represents level of importance thereof in the moving picture data;

an extracting portion for extracting, from among frames of picture data whose evaluation value and/or movement of the evaluation value meet a specific condition, at least one frame group which is a collection of chronologically consecutive frames of picture data; and

a generating portion for using at least some of the extracted frames to generate the condensed moving picture data.

According to the moving picture processing device of the invention, moving picture data can be evaluated on the basis of each frame of picture data, and there can be generated condensed moving picture data composed of frames of picture data that are appropriate for a condensed moving picture.

The evaluation value may be calculated on the basis of zoom operation or pan operation of the video camera, for example. Zoom operations can utilize a zoom lens to enlarge or reduce the image of a photographic subject. Pan operations can involve shooting while changing the direction of camera over a wide range, with the camera kept in a fixed position. The evaluation value may also be calculated on the basis of location of a moving body within frame pictures, size of a moving body, movement of the background, size of skin tone area, or the like. Additionally, the evaluation value may be calculated on the basis of the number of objects in a frame picture, frame picture brightness, color histograms, audio data, or the like.

The moving picture processing device may further comprise a dividing portion for dividing the moving picture data to establish a plurality of scenes each containing a plurality of frames of the picture data; and

wherein the extracting portion extracts at least one of the frame groups from each of the scenes.

By so doing, at least portions of all scenes can be included in the condensed moving picture data, whereby it is easy to comprehend all of the scenes by means of viewing the condensed moving picture. The dividing portion may divide the moving picture data at specific intervals rather than in scene units, with the extracting portion extracting at least one frame group from each division of data. The specific interval may be based on time or data quantity, for example. By viewing a condensed moving picture generated in this way, it is possible for the user to decide the necessity of moving picture data at each specific interval. Accordingly, the user can generate condensed moving picture data utilizable in editing operations.

Additionally, the dividing portion may divide the moving picture data on the basis of discontinuous change in the evaluation value.

In many instances, at the point of a scene transition in a moving picture, there is a discontinuous change in an evaluation value, such as in the brightness or color histogram of the frames of data, in the audio data, or the like. Thus, moving picture data can be divided into scenes on the basis of such discontinuous change in an evaluation value. As another method, moving picture data can be divided into scenes on the basis of differences of individual pixel values in two frame pictures. A point at which the differences exceeds a specific value can be determined to be scene transition.

The specific condition of the moving picture processing device discussed above can be one wherein the evaluation value is at least equal to a specific threshold value. Additionally, there may be appended to the specific condition the requirement that the evaluation value persist in a state at least equal than the specific threshold value, for at least a specific time interval. Where the moving picture data has been divided into scenes, different threshold values may be used for each division of data.

The device may further comprise a playback time input portion for inputting a desired value of playback time of the condensed moving picture data; and an adjusting portion for adjusting the threshold value depending on the desired value of playback time.

By so doing, condensed moving picture data can be generated according to the desired value of playback time. In the event that the playback time of generated condensed moving picture data is outside of a specific time range the includes the desired value, the adjusting portion may adjust the threshold value and again generate condensed moving picture data.

The extracting portion of the moving picture processing device discussed above may preferentially extract frame groups whose rate of change of the evaluation value is 0 or above.

Typically, in most cases frame groups during and immediately after a zoom operation will have higher level of importance as a moving picture than do frame groups after a zoom operation. Where an evaluation value has been established on the basis of zoom operation, in most cases, the rate of change of the evaluation value will be 0 or above during and immediately after zoom operation, while the rate of change of the evaluation value in frame groups after zoom operation will be negative. Before and after zoom operation there will be present frames that, despite identical evaluation values, have rates of change that differ in sign. When the two are compared, even where their evaluation values are identical, ultimately the rate of change of the evaluation value is 0 or above, and in most instances the frame groups will have higher level of importance as a moving picture than do those with a negative rate of change in evaluation value. Accordingly, by so doing, frame groups that are more suitable as condensed moving picture data can be extracted.

The extracting portion of the moving picture processing device discussed above may take two frame groups which, of the plurality of frame groups, have a time interval between the frame groups that is smaller than a specific value; and assemble the two frame groups and the picture data for all of the frames therein to extract them as a single frame group.

Where the time interval between an extracted frame group and a frame group is small, there may be instances in which the viewer of the condensed moving picture perceives incongruity, as if the condensed moving picture were interrupted prematurely. According to the present invention, such perceived incongruity may be prevented.

Additionally there may be provided a scene dividing portion for dividing the moving picture data to establish a plurality of scenes each containing a plurality of the frames of picture data;

and in the event that the two frame groups and all frame picture data therein are within the same scene, the extracting portion may further extract them as a single frame group.

Where a condensed moving picture breaks at a scene transition point, the viewer of the condensed moving picture will rarely perceive incongruity. Thus, by not extracting frame picture data between two frame groups at scene transitions, frame picture data of low evaluation can be prevented from being included in the condensed moving picture data.

The extracting portion of the moving picture processing device can extract frame groups composed of a specific number or more of frames of picture data.

By so doing, for each frame group, there can be assured length sufficient to enable the viewer of the condensed moving picture to comprehend the content thereof.

The calculating portion of any of the moving picture processing devices discussed above may be one that calculates the evaluation value using a motion vector calculated by comparing the two frames of picture data that include the frame picture data targeted for calculation of the evaluation value.

Zoom-up operations or the like can be detected from the motion vector, and a frame image considered to be one that the photographer particularly intended to shoot can be identified thereby. Such frame images may be deemed to have high level of importance in the moving picture data, when calculating the evaluation value. It is not necessary to always use a motion vector to calculate evaluation values; it is also acceptable to store in memory shooting information, such as zoom operation or camera attitude at the time of shooting, and to calculate evaluation values using this shooting information.

The moving picture processing device according to another embodiment of the invention is a moving picture processing device for extracting some moving picture data from moving picture data, comprising:

a still picture evaluating portion that on the basis of a specific condition evaluates each of multiple still picture data included in the moving picture data, and generating a first picture evaluation value with reference to the evaluation;
a moving picture evaluating portion for generating a second picture evaluation value for each of the multiple still picture data, with reference to the first picture evaluation value of each of the multiple still picture data and to the chronological rate of change of the first evaluation value; and
a moving picture data extracting portion that on the basis of the second picture evaluation value extracts from the moving picture data moving picture data composed of multiple still picture data whose second evaluation value is greater than a specific threshold value.

According to the moving picture data processing device of the present invention, moving picture data is extracted not just in consideration of a first picture evaluation value for evaluating the importance of each frame picture, but also of the rate of change of the first picture evaluation value, and thus the moving picture data desired by the user can be extracted automatically.

In the moving picture data processing device discussed above,
the moving picture evaluating portion may have an evaluation mode wherein a value derived by increasing the first picture evaluation value of multiple still picture data whose chronological rate of change of the first evaluation value is positive is designated as the second picture evaluation value; or
the moving picture evaluating portion may have an evaluation mode wherein a value derived by decreasing the first picture evaluation value of multiple still picture data whose chronological rate of change of the first evaluation value is negative is designated as the second picture evaluation value.

By so doing, moving picture data that chronologically precedes a peak image representing the frame picture at the time of the peak can be extracted in a focused manner, whereby the digest picture desired by the user can be generated. The reason for focused extraction of moving picture data chronologically preceding the peak image is that, in most cases, the moving picture leading up to the peak picture is important as the moving picture of a preparatory period extending up to the peak picture, whereas pictures coming after the peak image has passed are of little interest to the user, despite their high importance as still picture units.

Methods for increasing the first picture evaluation value include a method of adding a predetermined positive value, or a method of multiplication by a coefficient having a value greater than 1, for example. On the other hand, methods for decreasing the first picture evaluation value include a method of subtracting a predetermined positive value, or a method of multiplication by a coefficient having a value less than 1. Another method of decrease is to set values to zero across the board.

In the moving picture data processing device discussed above, the moving picture evaluating portion may have an evaluation mode wherein the sum of the first picture evaluation value and a value derived by multiplying the chronological rate of change of the first picture evaluation value by a specific positive coefficient is designated as the second picture evaluation value.

By so doing, the extent to which moving picture data chronologically preceding a peak image is extracted in a focused manner can be adjusted quantitatively by means of manipulating a certain coefficient. This adjustment can be established, for example, with reference to a photographic subject contemplated by the user. Specifically, the appropriate adjustment level will differ depending on whether the photographic subject contemplated by the user is a human subject having a large dynamic element, or a landscape having a small dynamic element.

In the moving picture data processing device discussed above, in preferred practice the specific coefficient will be set to a positive value smaller than 1. This is because through experimentation the inventors have discovered that it is typically preferable to set the specific coefficient between 0 and 1.

In the moving picture data processing device discussed above, the moving picture data extracting portion may have an extraction mode wherein, on the basis of the second picture evaluation value, moving picture data composed of multiple still picture data whose second picture evaluation value is greater than a threshold value, and having playback time longer than a specific time, is extracted from the moving picture data. By so doing, extraction of extremely short moving picture data of the sort that would not be desired by the user can be eliminated.

The moving picture data processing device discussed above may further comprise a scene dividing portion for dividing the moving picture data on a scene to scene basis, and
the moving picture data extracting portion may perform the extraction with respect to each scene.

In the moving picture data processing device discussed above, the moving picture data extracting portion may calculate, with respect to each scene, the average value of the first picture evaluation value and/or the second picture evaluation value, and vary the specific threshold value with respect to each scene, depending on the average value.

The digest picture generating device of the present invention comprises:

any of the moving picture data processing devices discussed above; and
a moving picture data concatenation portion that, in the event that the extracted moving picture data is multiple data, concatenates the extracted multiple moving picture data to generate the digest pictures.

According to the digest picture generating device of the invention, digest picture data can be generated automatically by concatenating moving picture data extracted in consideration of the rate of change of the first picture evaluation value.

In the digest picture generating device discussed above,
the moving picture data concatenation portion may have a concatenation mode wherein the extracted multiple moving picture data is concatenated chronologically; or
the moving picture data concatenation portion may have a concatenation mode wherein the extracted multiple moving picture data is concatenated in an order determined with reference to the first picture evaluation value and/or second picture evaluation value of multiple still picture data making up each of the extracted multiple moving picture data.

The present invention can be reduced to practice in various other embodiments, such as a digest picture data output device, a moving picture data attribute information generating device, a moving picture data attribute information storage device, a program for realizing with a computer the functions of a digest picture data generating method or device, a recording medium having such a computer program recorded thereon, a data signal containing the computer program and embodied in a carrier wave, and the like.

BRIEF DESCRIPTION OF THE DRAWINGS

FIG. 1 is an illustration depicting generation of condensed moving picture data in the prior art.
FIG. 2 is an illustration depicting a simplified arrangement of the moving picture processing device in Embodiment 1 of the invention.
FIG. 3 is an illustration describing frame picture evaluation values in Embodiment 1 of the invention.
FIG. 4 is an illustration depicting a method for detecting frame picture data at the start/completion of a zoom operation, and frame picture data at the start/completion of a pan operation.
FIG. 5 is an illustration depicting a moving body mv in Embodiment 1 of the invention.
FIG. 6 is an illustration depicting a "sum" evaluation value obtained by summing the evaluation values of FIG. 3(b) -(g) in Embodiment 1 of the invention.

FIG. 7 is an illustration depicting the condensed moving picture data generation process in the moving picture processing device 100 in Embodiment 1 of the invention.

FIG. 8 is a flowchart depicting the frame picture motion detection process in Embodiment 1 of the invention.

FIG. 9 is a flowchart showing the frame group extraction process in Embodiment 1 of the invention.

FIG. 10 is a flowchart depicting the frame group sorting process in Embodiment 1 of the invention.

FIG. 11 is an illustration depicting the picture processing system 100 in Embodiment 2 of the invention.

FIG. 12 is an illustration depicting the operation display screen 200 in the picture file creation process displayed on the display 18a.

FIG. 13 is a flowchart depicting the content of the still picture data generation process in Embodiment 2 of the invention.

FIG. 14 an illustration depicting an example of the arrangement of moving picture data used in Embodiment 2 of the invention.

FIG. 15 is a chart showing results of the scene division process in Embodiment 2 of the invention.

FIG. 16 is a flowchart depicting the specifics of the evaluation value calculation process in Embodiment 2 of the invention.

FIG. 17 is a flowchart depicting the specifics of the moving picture data extraction process in Embodiment 2 of the invention.

FIG. 18 is a flowchart depicting the specifics of the moving picture data extraction process in Embodiment 3 of the invention.

FIG. 19 is an illustration depicting the picture management system 100a in Embodiment 4 of the invention.

FIG. 20 is an illustration depicting the contents of a database in picture management of Embodiment 4 of the invention.

FIG. 21 is an illustration depicting the contents of a data file GF stored in a recording medium in Embodiment 4 of the invention.

FIG. 22 is an illustration depicting index pictures printed onto recording media.

FIG. 23 is an illustration depicting the specifics of the picture data automated management process in Embodiment 4 of the invention.

## BEST MODES FOR CARRYING OUT THE INVENTION

The modes for carrying out the invention are described on the basis of certain embodiments, in the order indicated below.

A. Embodiment 1

A1. Arrangement of Moving Picture Processing Device:
A2. Evaluation Value Calculation and Frame Group Extraction:
A3. Processing in Embodiment 1:
A4. Effects of Embodiment 1:
A5. Variation Example of Embodiment 1:

B. Arrangement of Moving Picture Processing System in Embodiment 2 of the Invention:
C. Digest Picture Data Generation Process in Embodiment 2 of the Invention:
D. Digest Picture Data Generation Process in Embodiment 3 of the Invention:
E. Digest Picture Data Generation Process in Embodiment 4 of the Invention:
F. Variation Examples:

A. Embodiment 1

A1. Arrangement of Moving Picture Processing Device:

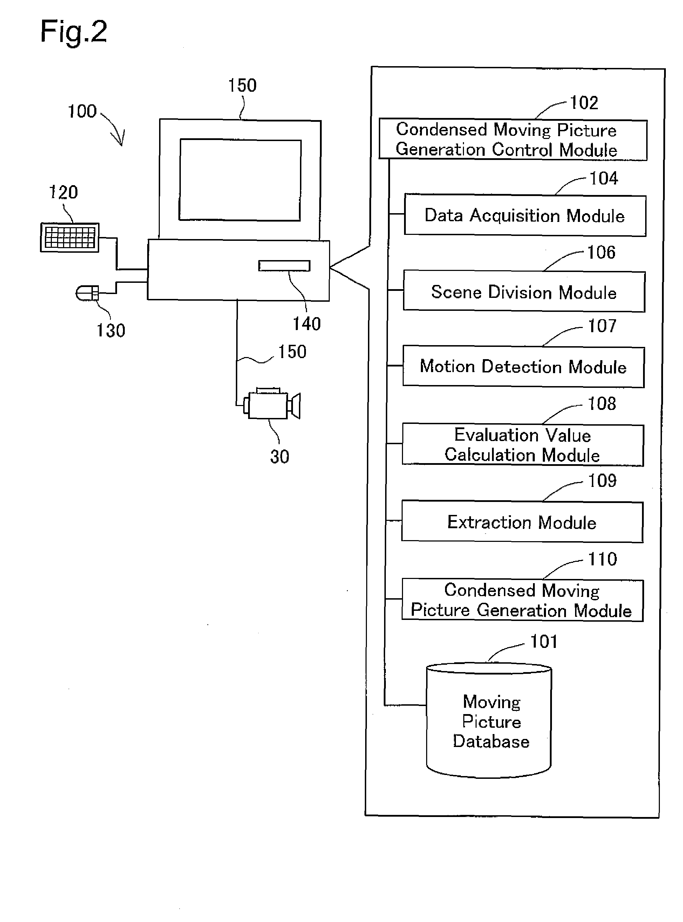

FIG. 2 is an illustration depicting a simplified arrangement of the moving picture processing device as an embodiment. The picture processing device 100 is shown at left, and functional blocks of the picture processing device 100 are shown at right. The picture processing device 100 is a device for generating condensed moving picture data, which is condensed information from moving picture data composed of multiple frames of picture data. In this embodiment, a picture represented by frame picture data is termed a frame picture. This frame picture means a still picture that is displayable in non-interlaced format.

The picture processing device 100 is an ordinary personal computer having a keyboard 120 and a mouse 130 as devices for inputting information to the picture processing device 100; and a display 150 as a device for outputting information. The picture processing device 100 is also furnished with a digital video camera 30 and CD-R/RW drive 140 as devices for inputting moving picture data to the picture processing device 100. As other devices besides the CD-R/RW drive for inputting moving picture data, it would be possible to furnish a DVD drive or other drive device capable of reading out data from information storage media of various kinds.

By means of an application program that runs on a specific operating system, the picture processing device 100 realizes the functions of a condensed moving picture generation control module 102, a data acquisition module 104, a scene division module 106, a motion detection module 107, an evaluation value calculation module 108, an extraction module 109, and a condensed moving picture generation module 110. These functions may also be furnished through hardware.

The various functions are discussed below. The data acquisition module 104 reads moving picture data from a CD-RW in the CD-R/RW drive 140, from the digital video camera 30, or from a hard disk (not shown), and builds a moving picture database 101 in RAM. The data acquisition module 104 acquires the desired value for playback time of the condensed moving picture, input by the user using the keyboard 120 or the mouse 130, and stores it in memory.

The scene division module 106 detects scene transitions in the moving picture, and divides the moving picture data into scenes. The motion detection module 107 derives motion vectors through comparisons among frames of picture data, and detects a moving body blocks on the basis of motion vectors.

The evaluation value calculation module 108 calculates an evaluation value, described later, for the frame picture data, on the basis of a motion vector, moving body block, etc. On the basis of the evaluation value, the extraction module 109 extracts a collection of chronologically consecutive frame picture data (hereinafter termed a frame group). The extraction module 109 extracts a single frame group from each scene. The condensed moving picture generation module 110 stitches together the extracted frame groups to generate condensed moving picture data, and outputs it to the CD-RW in the CD-R/RW drive 140, to the digital video camera 30, or to the hard disk. The condensed moving picture generation control module 102 performs overall control of condensed moving picture creation operations of the modules discussed above.

In addition to these, there may also be furnished a display module for displaying condensed moving pictures on the display 150 by means of the condensed moving picture data.

A2. Evaluation Value Calculation and Frame Group Extraction:

The evaluation value calculation module 108 evaluates frame picture data with regard to the parameters of zoom, pan, still, moving body location, moving body size, and skin tone area size, and calculates evaluation values for these.

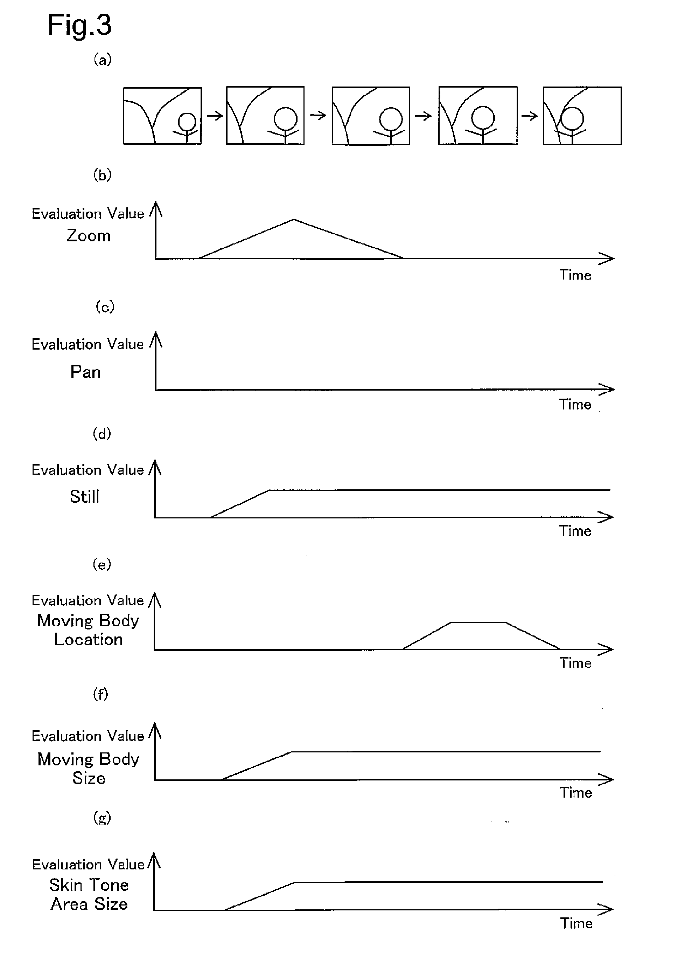

FIG. 3 is an illustration describing frame picture evaluation values in Embodiment 1 of the invention. FIG. 3 (a) is an drawing showing an example of five frame pictures extracted from a moving picture. The frame pictures are illustrated in chronological order from the left. The frame pictures shown in FIG. 3 (a) are not consecutive; between the $n$th frame picture from the left *(n = 1 -4)* and *the n + 1* frame, multiple frame images exist in the moving picture, but these have been omitted from the illustration here. FIG. 3 (b) -(g) are graphs showing change over time of the evaluation values of the frame picture data, for each parameter. In the graphs, time corresponds to elapsed time from the start of playback when the moving picture is played back. In the graphs, frame picture data evaluation values displayed at each elapsed time when the moving picture is played back are shown connected by lines. The evaluation values of the frame picture data in FIG. 3 (a) are graphed so as to appear in proximity to locations below the center of the frame images to which they correspond.

FIG. 3 (b) is a graph of the "zoom" evaluation value. "Zoom" is an evaluation value relating to zoom operation. A zoom operation is a camera operation that enlarges or reduces a photographic subject. The evaluation value calculation module 108 uses two kinds of function, namely, a zoom operation function and a zoom completion function, to calculate the "zoom" evaluation value. The zoom operation function is a linear function of positive slope, which outputs larger "zoom" the greater the elapsed time since start of a zoom operation. The zoom completion function is a linear function of negative slope, which outputs smaller "zoom" the greater the elapsed time since start of a zoom operation.

From the time that zoom operation is started until 30 frames have elapsed since completion of the zoom operation, the evaluation value calculation module 108 uses the zoom operation function; and starting from the time that 30 frames have elapsed since completion of the zoom operation, it uses the zoom completion function. The zoom completion function is predetermined only with respect to its slope. The evaluation value calculation module 108 derives segments such that that the final "zoom" derived by means of the zoom completion function coincides with the final "zoom" derived by means of the zoom operation function. The evaluation value calculation module 108 uses the zoom completion function until a value of 0 or less is output. In the event that "zoom" has reached a value of 0 or less, it is corrected to a value of 0. The evaluation value calculation module 108 assigns a value of 0 to "zoom" of frame picture data not falling into the time period from the start of zoom operation until "zoom" of 0 or less is output.

Frame pictures during and immediately after a zoom operation are considered to be frame pictures that the photographer particularly intended to shoot, for which reason the zoom functions are established in the above manner. Methods for detecting the time that a zoom operation is started and the time that a zoom operation is concluded will be described later.

In zoom operations, an operation that enlarges the image of a photographic subject is termed zoom-in, and an operation that reduces the image of a photographic subject is termed zoom-out. The zoom operation function and the zoom completion function are used for both zoom-in and zoom-out. In the frame pictures of FIG. 3 (a), zoom-in begins from the first frame picture from left, with zoom-in being completed in the second frame image from left. Accordingly the "zoom" evaluation value of FIG. 3 (b) changes in the manner shown in the graph.

FIG. 3 (c) is a graph of the "pan" evaluation value. "Pan" is an evaluation value relating to pan operation. Pan operation is an operation that involves shooting while changing the direction of camera over a wide range, with the camera kept in a fixed position. The evaluation value calculation module 108 calculates the "pan" evaluation value by means of tow functions termed pan functions. The two pan functions are functions having the same structure as the two zoom functions described previously, and are used to detect frame picture data at the start and completion of pan operation. Further, the time conditions for use of the two pan functions are the same as for the two zoom functions. The evaluation value calculation module 108 calculates values of 0 for "pan" outside the time period in which the pan functions are used. Frame pictures during and immediately after a zoom operation are considered to be frame pictures that the photographer particularly intended to shoot, for which reason the pan functions are established in the above manner. Methods for detecting start of pan operations and completion of pan operations will be described later. In the frame pictures of FIG. 3 (a), since no pan operation is performed, the evaluation value of FIG. 3 (c) remains at 0, as shown by the graph.

FIG. 3(d) is a graph of the "still" evaluation value. "Still" is an evaluation value relating to motion of the background. The evaluation value calculation module 108 calculates the "still" evaluation value by means of a function termed the still function. The still function is a function that outputs "still" when the magnitude of background motion is input (hereinbelow, the magnitude motion shall simply be termed speed). The still function outputs larger values for speeds closer to 0. The still function was established in the above manner, since a frame pictures of a scene in which the background is still is considered to be a frame picture that the photographer particularly intended to shoot. The method for calculating background speed will be described later. In the frame pictures of FIG. 3 (a), background motion becomes gradually smaller until reaching the second frame image from the left, with the background becoming still beginning from the second frame image from the left. Accordingly, the evaluation value of FIG. 3(d) varies in the manner shown in the graph.

FIG. 3(e) is a graph of the "moving body location" evaluation value. "Moving body location" is an evaluation value relating to the location of a moving body (photographic subject). Moving body referred to hereinbelow indicates the largest moving body within the frame picture. The evaluation value calculation module 108 calculates the "moving body location" evaluation value by means of a function termed the moving body location function. The moving body location function is a function that outputs a "moving body location" evaluation value when the position of a moving body within a frame picture is input. The moving body location function outputs larger values with input values for moving body location that are closer to the center of the frame picture. Where an input value for the moving body location is outside a predetermined range that includes the center, a value of 0 is output. The moving body location function was established in the above manner, since a frame picture of a scene in which a moving body is located at the center is considered to be a frame picture that the photographer particularly intended to shoot. The method for calculating moving body location will be described later. In the frame pictures of FIG. 3 (a), a moving body (human subject) gradually moves to the center starting from the third frame picture from the left, and in the fourth frame picture from the left is located substantially in the center of the frame picture. Starting from the fourth frame picture, the moving body (human subject) gradually moves leftward from the center. Accordingly, the evaluation value of FIG. 3(e) varies in the manner shown in the graph.

FIG. 3(f) is a graph of the "moving body size" evaluation value. "Moving body size" is an evaluation value relating to the size of a moving body. The evaluation value calculation module 108 calculates the "moving body size" evaluation value by means of a function termed the moving body size function. The moving body size function is a function that outputs a "moving body size" evaluation value when the size of a moving body within a frame picture is input. The moving body size function outputs larger values with larger input values. Where a value below a predetermined value is input, a value of 0 is output. The moving body size function was established in the above manner, since a frame picture shot of a large moving body is considered to be a frame picture that the photographer particularly intended to shoot. The method for calculating moving body size will be described later. In the frame pictures of FIG. 3 (a), the moving body becomes gradually larger starting from the first frame picture from the left, with the moving body maintained at constant size from the second frame picture from the left, and thus the evaluation value of FIG. 3(f) varies in the manner shown in the graph.

FIG. 3(g) is a graph of the "skin tone area size" evaluation value. "Skin tone area size" is an evaluation value relating to the size of a skin tone area. The evaluation value calculation module 108 calculates the "skin tone area size" evaluation value by means of a function termed the skin tone area size function. The skin tone area size function is a function that outputs a "skin tone area size" evaluation value when the size of an area of skin tone in a frame image is input. The skin tone area size function outputs larger values with larger input values. Where a value below a predetermined value is input, a value of 0 is output. The function was established in the above manner, since a frame picture shot containing a large skin tone area is considered to be a frame picture of a human subject shot in close-up, and to be a frame picture that the photographer particularly intended to shoot. The method for calculating skin tone area size will be described later. In the frame pictures of FIG. 3 (a), a skin tone area becomes gradually larger starting from the first frame picture from the left, with the skin tone area maintained at constant size from the second frame picture from the left, and thus the evaluation value of FIG. 3(g) varies in the manner shown in the graph.

The functions discussed above for use in calculating evaluation values can be established in various ways. For example, the still function for calculating the "still" evaluation value could be designed to output different values depending on what number the frame picture data is since background speed became 0. With regard to moving body location as well, different values could be output depending on what number the frame picture data is since the location of the moving body reached the center. Apart from the evaluation values discussed above, the evaluation value calculation module 108 may also calculate evaluation values relating to translation and moving body motion. Translation refers to a case where a moving body is present in the center of a frame image, and the background moves, as with a marathon broadcast. The speed of motion of a moving body are speed relative to the background of the moving body. In the event that the speed of motion of a moving body is equal to or greater than a predetermined value, the evaluation value relating to the speed of motion of a moving body is set to a value of 0.

Next, methods for detecting start and completion of zoom operations and start and completion of pan operations will be described. Start and completion of zoom operations and start and completion of pan operations are detected on the basis of motion vectors. A motion vector refers to a vector indicating the extent to which a pattern of blocks created by dividing a frame picture into multiple parts undergoes motion in the interval from one frame picture to another frame picture. Greater motion of the pattern of a block, i.e. a greater motion vector of the block, means faster motion of the moving body represented by the pattern of that block. The method for calculating motion vectors will be described later; in the description following, the motion vector is assumed to have been already calculated.

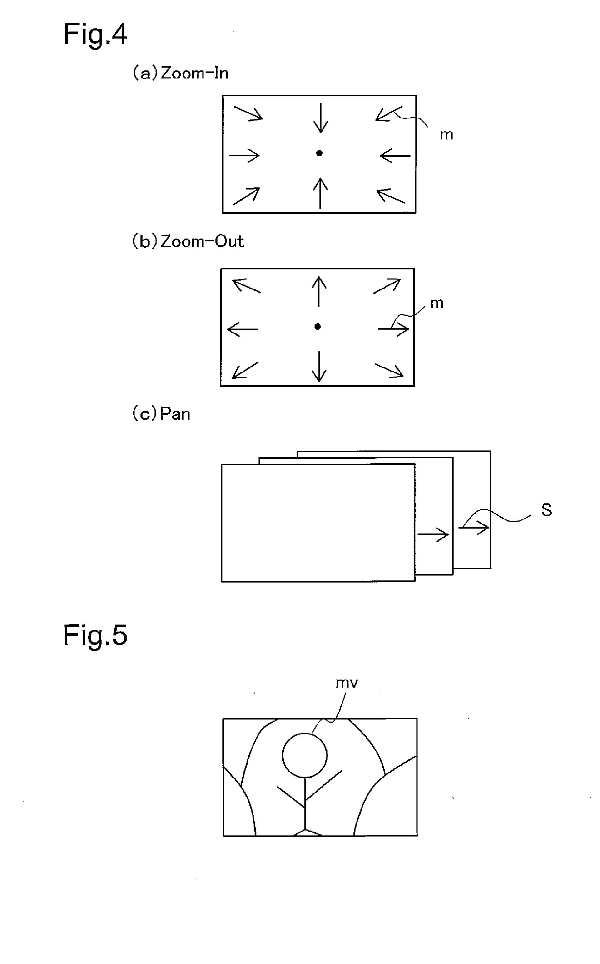

FIG. 4 is an illustration depicting a method for detecting frame picture data at the start/completion of a zoom operation, and frame picture data at the start/completion of a pan operation. In the moving picture data, in the event that the motion vectors m of blocks begin to move towards the center from the outside of the frame picture as shown in FIG. 4 (a), the evaluation value calculation module 108 decides at this point that zoom-in has begun, and detects that frame picture data as being the frame picture data in which the zoom operation starts. Once the zoom operation has started, at the point in time that the motion vectors m of blocks cease to move towards the center from the outside of the frame picture as shown in FIG. 4 (a), the frame picture data is detected as being the frame picture data in which the zoom operation is completed.

In the event that the motion vectors m of blocks begin to move towards the outside from the center of the frame picture as shown in FIG. 4 (b), the evaluation value calculation module 108 decides at this point that zoom-out has begun, and detects that frame picture data as being the frame picture data in which the zoom operation starts. Once the zoom operation has started, at the point in time that the motion vectors m of blocks cease to move towards the outside from the center of the frame picture as shown in FIG. 4 (b), the frame picture data is detected as being the frame picture data in which the zoom operation has completed.

In some instances, zoom button operation information indicating whether the zoom button of the video camera has been pressed may have been appended as metadata to moving picture data. The frame picture data in which the zoom operation starts and the frame picture data in which the zoom operation is completed may also be detected on the basis of such zoom button operation information.

On the other hand, the frame picture data in which a pan operation starts and the frame picture data in which a pan operation is completed are detected on the basis of shift S of the entire frame picture. Shift S is a vector indicating the extent to which and the direction in which an entire frame picture moves in the interval between one frame picture and other frame picture. The magnitude of shift S is higher with faster speed of change of direction of the video camera. In the event that the direction of shift S remains the same over a predetermined number of chronologically consecutive frame pictures, as depicted in FIG. 4 (c), it is decided that a pan operation has started. The initial frame picture data among frame pictures having the same direction of shift S is detected as being the frame picture data in which the pan operation starts. The last frame picture data among frame pictures having the same direction of shift S is detected as being the frame picture data in which the pan operation has completed.

Next, methods for calculating frame picture background speed, moving body location, and moving body size will be described. These values are calculated on the basis of moving body blocks, which are collections of blocks whose motion vector have magnitude exceeding a predetermined value. Patterns represented by moving body blocks can be presumed to be moving bodies. Where several moving bodies are present in a frame picture, blocks whose motion vectors exceed a predetermined value are clustered to derive multiple moving body blocks. FIG. 5 is an illustration depicting a moving body mv.

The evaluation value calculation module 108 calculates background speed from the magnitude of the motion vectors of blocks other than moving body blocks (hereinafter these are termed background blocks). The sum of the magnitude of the motion vectors of the background blocks may be designated as the background speed; or the average value of the magnitude of the motion vectors of the background blocks may be designated as the background speed. Here, the average value is designated as the background speed.

The evaluation value calculation module 108 calculates the center of mass of a moving body block to be the moving body location. The evaluation value calculation module 108 also calculates the size of a moving body block to be the moving body size. Where there are several moving body blocks, the size of all of the moving body blocks may be designated as the moving body size.

Next, the method for detecting skin tone area size will be discussed. An area of skin tone can be derived as a collection of pixels having RGB values that fulfill the conditions 0.1 < H < 0.9 and G > B in the following equations.

$$H \text{ (hue)} = 1.732 \, (G - B)/(2R - G - B) \ \ldots (1)$$

$$S \text{ (saturation)} = \{(B - R)^2 + (R - G)^2 + (G - B)^2\}/3 \ \ldots (2)$$

$$V \text{ (value)} = R + G + B \ \ldots (3)$$

The evaluation value calculation module 108 calculates the number of skin tone pixels in a frame picture to be the skin tone area size. The skin tone area size can also be designated to be the number of skin tone pixels in a moving body block.

Next, the method for extracting frame groups on the basis of evaluation values derived in the manner discussed above will be described. The evaluation value calculation module 108 adds up the evaluation values for the parameters discussed above, for each frame of picture data.

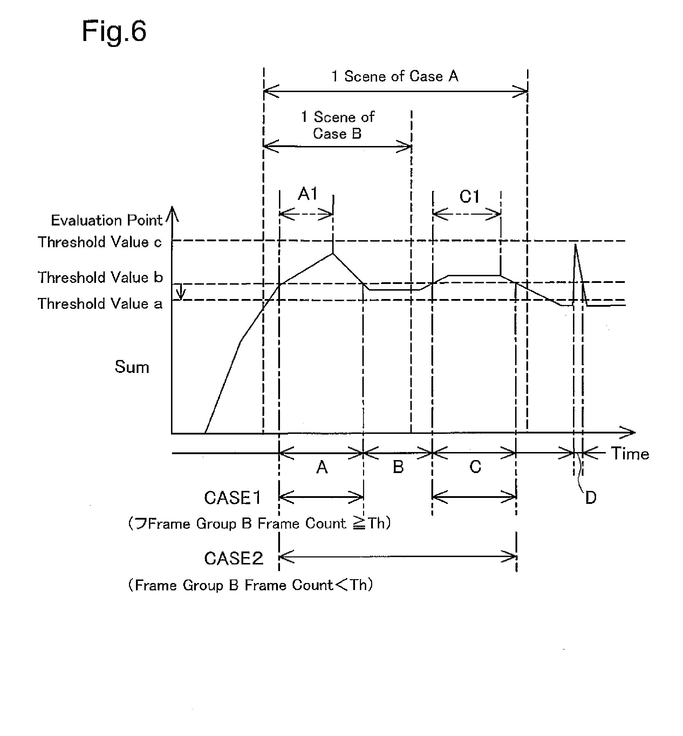

FIG. 6 is an illustration depicting a "sum" evaluation value obtained by summing the evaluation values of FIG. 3(b) -(g). The horizontal axis is shown extending beyond FIG. 3(b) -(g). The extraction module 109 extracts frame groups whose "sum" evaluation value is equal to or greater than a threshold value. For example, where the threshold value b in the graph of FIG. 6 is used, a frame group corresponding to a time range A (hereinbelow referred to as Frame Group A), a frame group corresponding to a time range C (hereinbelow referred to as Frame Group C), and a frame group corresponding to a time range D (hereinbelow referred to as Frame Group D) are extracted.

In this embodiment, there is attached the condition that frame groups be composed of more than a certain predetermined number of frames, in order to generate condensed moving picture data that plays back one scene such that the user can recognize it. In this case, frame groups with few frames and short playback time, such as Frame Group D, are not extracted.

In this embodiment, the extraction module 109 extracts only one frame group from a divided scene. Accordingly, when two candidate frame groups A, C are extracted from a single scene, as in CASE A, that having the larger sum of evaluation values of moving picture data in the frame group will be extracted. Here, since (sum of evaluation values of Frame Group A) > sum of evaluation values of Frame Group C), the extraction module 109 extracts Frame Group A. It would also be acceptable to extract the one with the largest maximum value of evaluation values in the frame group. Here, since (maximum value of evaluation values of Frame Group A) > (maximum value of evaluation values of Frame Group C), Frame Group A would be extracted.

Where threshold value c is used, in either CASE A or CASE B, no frame group whatsoever will be extracted from the one scene. Where a minimum of one frame group is to be extracted from one scene, the threshold value is adjusted (in the example of FIG. 6, threshold value c → threshold value a or b), so that a minimum of one frame group is extracted.

The description now returns to the case where threshold value b is used. In this embodiment, where the interval (time range B) between Frame Group A and Frame Group C is a small one, a frame group corresponding to time range B (hereinbelow referred to as Frame Group B) will be extracted together with Frame Group A and Frame Group C (CASE 2 in FIG. 6). This is in order to prevent the condensed moving pictures from becoming broken up further. In this embodiment, in the event that the number of frames is smaller than a predetermined value Th (= 150), the time range is determined to be a small one. Where the number of frames in Frame Group B is equal to or greater than the predetermined value Th, Frame Group B will not be extracted (CASE 1 in FIG. 6). In the event that the co-extracted frame groups (the collection of Frame Groups A, B, C) will not fit into a single scene, as in CASE B, Frame Group B will not be extracted even if the time range B is small. This is because since the scene runs out, there is no need to continue to play back frame pictures.

In this embodiment, the total number of frame images extracted (termed the total frame count) is limited according to the desired value for condensed moving picture playback time. In the event that the extracted total frame count is not within a predetermined range, the extraction module 109 the threshold value is adjusted, and frame extraction is carried out again. For example, with a frame group extracted using threshold value b, if the total frame count is not within the predetermined range, frame extraction is carried out again with the threshold value changed to threshold value a.

The extraction module 109 may also extract a frame group wherein the evaluation value rises or is maintained at a constant value, as with the time range A1 or the time range C1.

The evaluation value of FIG. 6 is derived by simply adding up the evaluation values of FIG. 3(b) -(g); however, the evaluation value calculation module 108 may weight each of the evaluation values of FIG. 3(b) -(g) before adding them up, to calculate an evaluation value serving as basis for extraction by the extraction module 109.

A3. Processing in Embodiment 1:

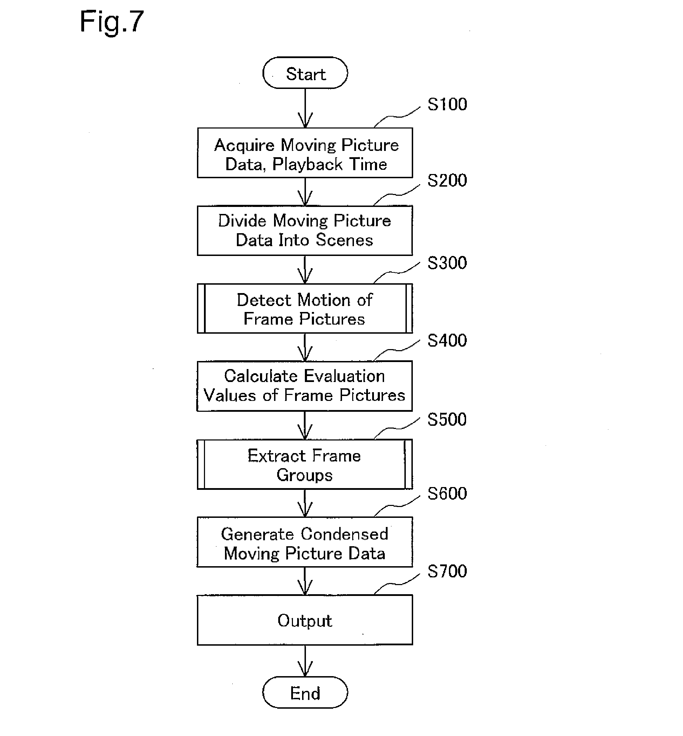

Next, processing in the moving picture processing device 100 will be described. FIG. 7 is an illustration depicting the condensed moving picture data generation process in the moving picture processing device 100. First, the moving picture processing device 100 acquires, through user input, moving picture data and desired values for condensed moving picture playback time (Step S100). Next, the acquired moving picture data is divided into scenes (Step S200). Scene division is carried out using techniques known in the art, by comparison of frames of picture data using characteristic quantities of the moving picture data, such as color or brightness histograms, or audio data. From the desired value for playback time, a desired range of total frame count is calculated according to the desired value. Since it is difficult to extract exactly a total frame count giving the desired value of playback time, a desired range is calculated for the purpose of providing some leeway.

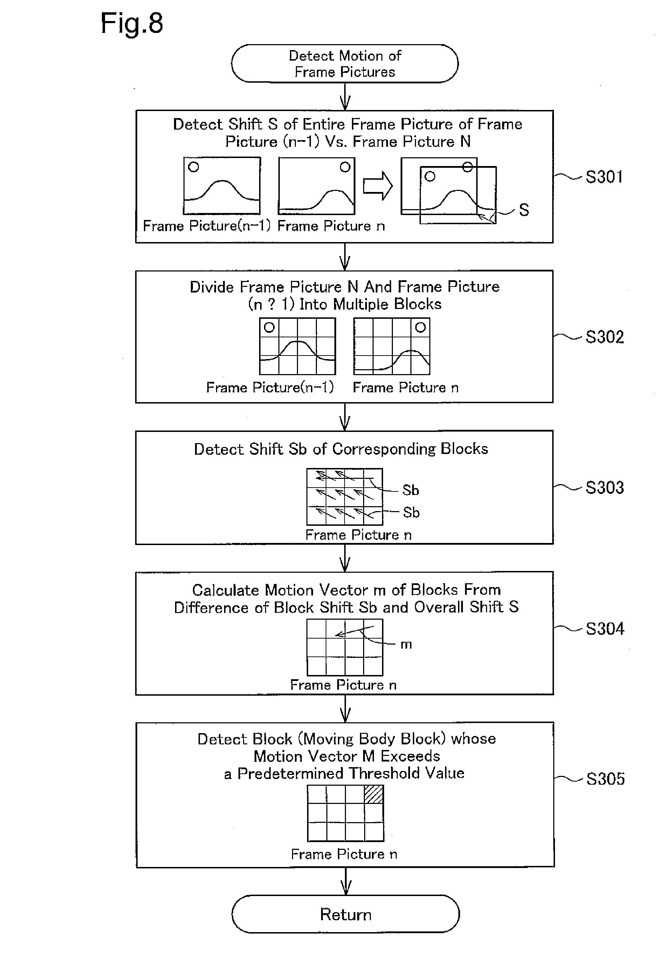

Next, motion of each frame picture is detected (Step S300). FIG. 8 is a flowchart depicting the frame picture motion detection process. In this process, first, the moving picture processing device 100 selects from among the plurality of frame pictures in the moving picture one baseline frame picture n as a target for detecting motion, and detects shift S of the frame picture overall between this baseline frame picture n and the preceding frame picture (n-1) (Step S301). Shift S can be detected, for example, using known techniques such as the gradient method or pattern matching method. Here, the detected shift S corresponds to shift S for the purpose of detecting pan, discussed earlier.

The drawing depicts an example in which a mountain constituting the background and a ball constituting a moving body are photographed in frame picture (n - 1) and a baseline frame picture n. When the frame picture (n - 1) and the baseline frame picture n are compared, the mountain is observed to move to the lower right of the frame picture and the ball to move rightward in the frame picture. It will be appreciated that the extent of movement of the ball is relatively greater than the extent of movement of the mountain, and that the area of the frame picture occupied by the mountain is relatively larger than the area occupied by the ball. By applying the gradient method or pattern matching method to such frame pictures, shift of the mountain

- which occupies a greater proportion of the area of the overall frame picture as compared to the ball which occupies only a small area of the overall frame picture - will be detected preferentially. That is, shift of the frame picture overall will substantially coincide with shift of the mountain.

While translational shift in the up-down or left-right directions and rotational shift in the rotational direction can occur as well, to simplify the description, the description assumes that no rotational shift occurs.

After shift S of the frame picture overall has been detected, the moving picture processing device 100 divides the frame picture (n-1) and the baseline frame picture n into respective blocks (Step S302). The drawing depicts an example in which each frame is divided into four in the horizontal direction and into three in the vertical direction.

After dividing the frame images, the moving picture processing device 100 detects shift Sb of each block of the frame picture (n - 1) corresponding to the blocks of the baseline frame picture n, and calculates a motion vector m for each block by taking the difference between the shift Sb of each block with respect to the overall shift S (Step S304). The motion vector m calculated here corresponds to the motion vector m used for detecting zoom-in and zoom-out, discussed earlier. In the illustrated example, other than the block at upper right in which the ball appears, shift Sb of blocks is substantially equal to the shift of the frame picture overall detected in Step S301, and thus cancels out to give motion vectors of zero; a motion vector m is detected only for the block at upper right.

Next, the moving picture processing device 100 decides whether the motion vector m exceeds a predetermined threshold value, and detects as a moving body any block whose motion vector m exceeds the predetermined threshold value (Step S305). The moving body block detected here corresponds to the moving body block used for detection of still, moving body location, and moving body size, discussed earlier. The purpose of providing the threshold value is in order to eliminate slight shift among blocks (e.g. slight rotational shift). A value of 30 pixels, for example, could be used as the threshold value. In the illustrated example, the block at upper right in the baseline frame picture n is identified as being a moving body block.

The processes of the aforementioned Step S301 -Step S305 are carried out for all frame picture data other than the initial frame picture data in the moving picture data.

The description now returns to FIG. 7. The moving picture processing device 100 next calculates evaluation values for each frame of picture data, on the basis of the shift S detected in Step S300, motion vectors m, and moving picture blocks (Step S400). The calculation method is the same as discussed previously in Section A2, with the evaluation value calculation module 108 calculating evaluation values for the parameters of zoom, pan, still, moving body location, moving body size, and skin tone area size. It then adds these up to derive sum evaluation values.

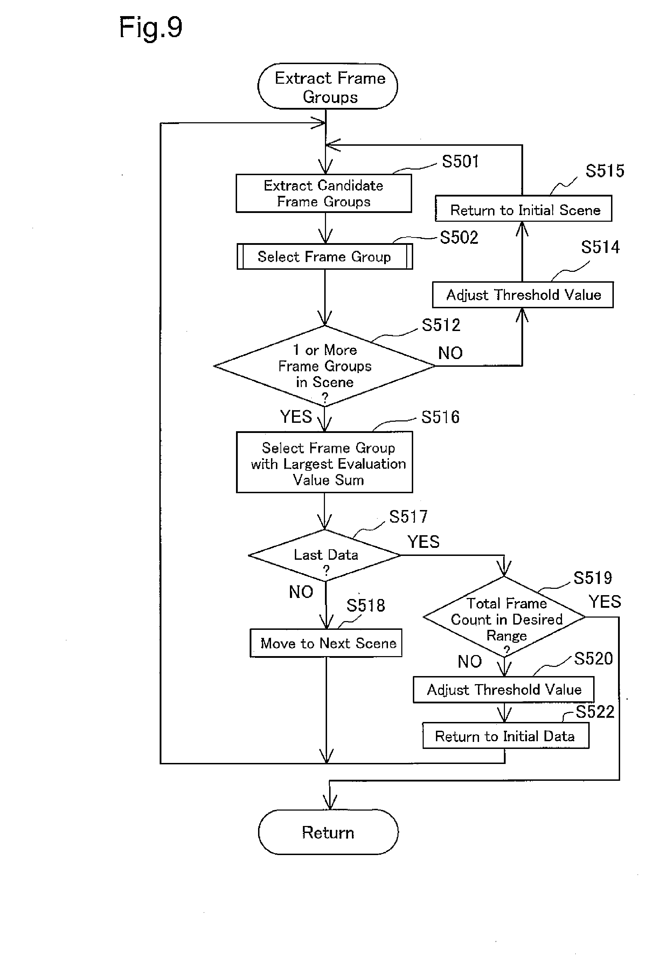

On the basis of the sum evaluation values derived thusly, frame groups are extracted for use in condensed moving picture data (Step S500). FIG. 9 is a flowchart showing the frame group extraction process. The moving picture processing device 100 searches for the evaluation values of each frame of picture data in the initial scene, and extracts all frame groups which are potential candidates for inclusion in the condensed moving picture data (Step S501). Specifically, frame groups all of whose frame picture data evaluation values are above certain threshold values are extracted.

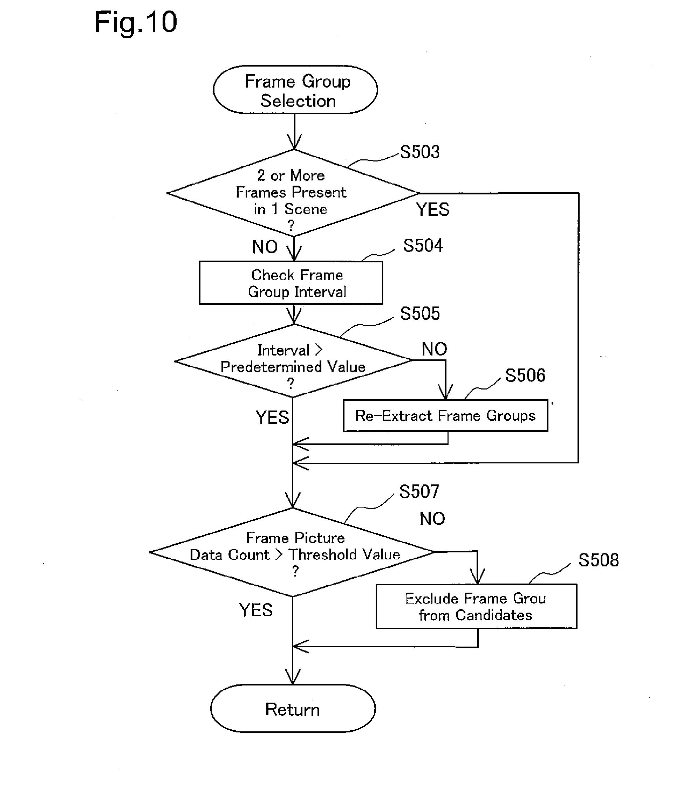

Next, sorting of the extracted frame groups is carried out (Step S502). FIG. 10 is a flowchart depicting the frame group sorting process. In the frame group sorting process, in the event that the frame groups extracted in Step S501 number two or more (Step S503: YES), the interval between any two frame groups is checked (Step S504). Here, interval refers to the number of frames of picture data present between the two frame groups, and corresponds to the time range B in the example of FIG. 6.

In the event that the interval is smaller than a predetermined value (Step S505: NO), frame groups are re-extracted (Step S506). In the re-extraction, there are extracted two frame groups with an interval smaller than the predetermined value, and a single frame group that groups together the frame picture data present between these two. This corresponds to the case, in the example of FIG. 6, of extracting a frame group corresponding to time range B together with Frame Group A and Frame Group C, in the event that the frame count of Frame Group B is smaller than the predetermined value Th (i.e. CASE 2 in FIG. 6). Once the intervals of all frame groups extracted in Step S501 have been checked, the process proceeds to the next step. In the event that one frame picture or fewer is extracted in Step S501 (Step S503: NO), the processes of Step S504 -Step S506 are omitted.

Next, the moving picture processing device 100 determines whether the frame counts of the extracted groups are greater than a predetermined value (Step S507). In the event that a frame picture data count is equal to or less than the predetermined value (Step S507: NO), that frame group is excluded as a candidate for condensed moving picture data (Step S508). In the example of FIG. 6, this corresponds to Frame Group D. In the event that the frame picture data count of a frame group is greater than the predetermined value (Step S508: YES), the frame group is added to the candidates, and the routine proceeds to the next step.

The description now returns to FIG. 9. The moving picture processing device 100 checks whether there is one or more remaining candidate frame groups in the scene (Step S512).

If there is not even one frame group remaining in the scene (Step S512: NO), it adjusts the threshold value (Step S514) and again returns to the start of the scene (Step S515). The process beginning with Step S501 is then repeated. Adjustment of threshold value corresponds, for example, to changing the threshold value from threshold value b to threshold value a in FIG. 6. The threshold value may be adjusted by being increased and decreased over a given range.

In the event that there is one or more remaining candidate frame groups in the scene (Step S512: YES), the frame group having the largest sum of evaluation values of the frames of picture data making up the frame group is selected for extraction (Step S516). This is because the frame group with the largest sum of evaluation values is conjectured to be the frame group that most appropriately represents the scene. In the event of a single remaining candidate frame group, the process of Step S516 is omitted. Alternatively, the process of Step S516 can be omitted, instead selecting two or more frame groups from one scene.

If processing has not been completed up to the end of the moving picture data (Step S509: NO), the system moves to the next scene (Step S510) and repeats the process starting with Step S501, for that scene.

If processing has been completed up to the end of the moving picture data (Step S517: YES), it is checked whether the total frame count is within the desired range (Step S519). If the total frame count is not within the desired range (Step S519: NO), the threshold value is adjusted (Step S520). Here, adjustment of the threshold value, like the adjustment of the threshold value in Step S514, corresponds to changing the threshold value from threshold value b to threshold value a in FIG. 6. However, whereas in Step S514 the threshold value used for that scene was adjusted, here, the threshold value used for the moving picture data in its entirety is adjusted. The threshold value may be adjusted by being increased and decreased over a given range, or adjusted on the basis of a predetermined function (for example, a function having the deficient frame picture count or excess frame picture count as a variable). The threshold value may also be adjusted so as to give different threshold values on a per-scene basis. Next, returning to the start of the moving picture data (Step S522), candidates up to that point are cleared, and extraction of frame groups recommences in the initial scene.

In the event that the total frame count is within the desired range (Step S519), the frame groups extracted as candidates up to that point are determined to be frame groups for use in the condensed moving picture data, whereupon the system advances to the next process.

The discussion now returns to FIG. 7. Once the frame picture data has been extracted, next, condensed moving picture data is generated (Step S600). The condensed moving picture data is generated by means of stitching together the extracted frame groups. The generated condensed moving picture data is then output (Step S700). The output destination is the digital video camera 30 or the CD-R/RW drive 140. The user can then view the condensed moving pictures by playing back the output condensed moving picture data with the digital video camera 30 etc.

A4. Effects of Embodiment 1:

According to the moving picture processing device 100 of the embodiment discussed above, moving picture data can be evaluated in terms of each frame of picture data, to generate condensed moving picture data composed of frame pictures suitable as condensed moving pictures. Since one frame group in each single scene is always included in the condensed moving picture data, there are no scenes that are not played back in the condensed moving pictures. That is, by playing back the condensed moving picture the user can view all scenes, facilitating comprehension of the moving picture in its entirety. Additionally, the frame groups included in the condensed moving picture data are selected from those considered most appropriate in scenes, making it even easier for the user to comprehend the original moving picture in its entirety.

Also, since the total frame count is limited so as to give a frame picture count matching the desired value for playback time, condensed moving picture data can be generated according to the desired value for playback time. In the event that the interval between two extracted frame groups is small, by connecting them and the frame picture present between them, it is possible to prevent perceived incongruity, as if the condensed moving picture had been interrupted. At scene transitions, even if the interval between two frame groups is small, there is no need to join them, and by not joining them, frame picture data of low evaluation can be prevented from being included in the condensed moving picture data. Additionally, by employing in the condensed moving picture data frame groups whose frame picture data counts are equal to or greater than a predetermined value, there can be prevented a condition in which it is difficult to comprehend the content of a condensed moving picture due to one scene being too short.

A5. Variation Example of Embodiment 1:

While the invention has been described hereinabove in terms of a particular embodiment, the invention is not limited thereto, it being possible to employ a wide range of other arrangements without departing from the spirit thereof. For example, whereas in Step S512, in the event that not even one frame group is present, but there exist frame pictures that were excluded in Step S508, rather than adjusting the threshold value and again extracting frame groups, an optimal frame group could instead be selected from the excluded frame groups and included among the candidates for the condensed moving picture data. At this time, an arbitrary number of frames of picture data coming before and after the optimal frame group may be newly appended to the optimal frame group. In Step S507, a number of frames of picture data equal to the deficit may be appended as well. When selecting an optimal frame group, selection may be made on the basis of the sum of evaluation values of the frame picture data making up the frame groups, or the maximum value of evaluation values.

Processes of the embodiment may be omitted where necessary. For example, in the event that there is not desired value for playback time, the processes of Step S519 -Step S522 may be omitted.

B. Arrangement of Moving Picture Processing System in Embodiment 2 of the Invention:

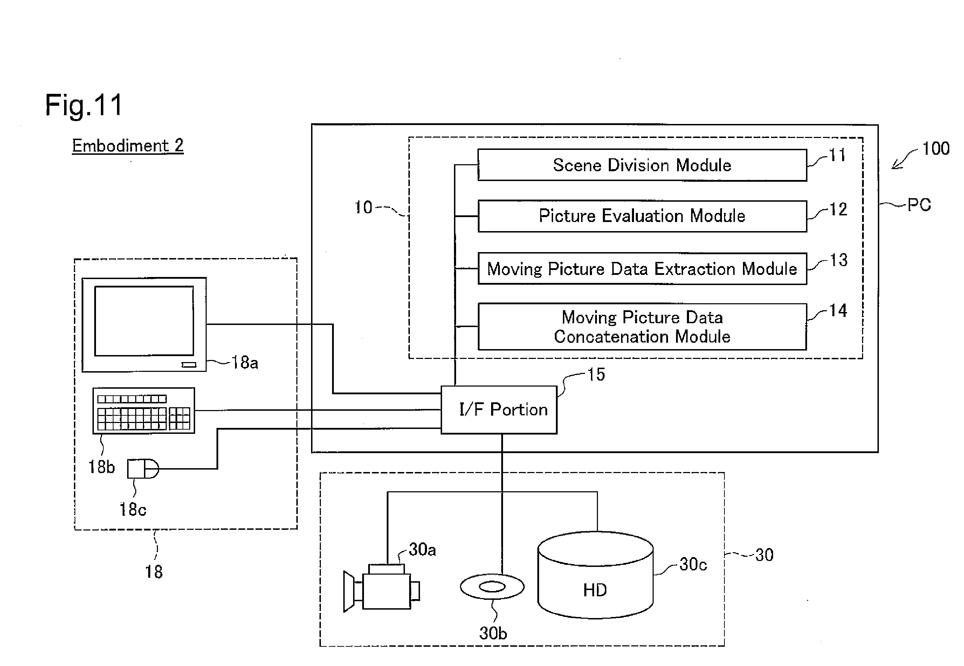

FIG. 11 is an illustration depicting the picture processing system 100 in Embodiment 2 of the invention. The picture processing system 100 comprises a moving picture database portion 30 for supplying moving picture data; a personal computer PC for extracting a portion of the moving picture data and generating digest picture data; and a user interface portion 18 for providing a user interface for this purpose. The user interface portion 18 comprises a display 18a for displaying moving pictures supplied by the moving picture database portion 30, and a operation display screen, described later; and a keyboard 18b and a mouse 18c for receiving user input.

The personal computer PC comprises a picture processing application program 10 for executing a process to create the digest picture data from the moving picture data; and an interface portion 15 for interface with external devices, namely, the moving picture database portion 30 and the user interface portion 18.

The picture processing application program 10 comprises a scene division module 11 for dividing the moving picture data into scenes; a picture evaluation module 12 for carrying out evaluation of moving picture data; a moving picture data extraction module 13 for extracting a portion of the moving picture data on the basis of this evaluation; and a moving picture data concatenation module 14 for concatenating multiple extracted moving picture data in chronological order and generating digest picture data. The picture evaluation module 12 functions as the "moving picture evaluation module" and "still picture evaluation module" cited in the claims herein.

The moving picture database portion 30 has a digital video camera 30a, a DVD 30b, and a hard disk 30c as the sources supplying it with moving picture data. In this embodiment, the moving picture data is a collection of frame picture data representing non-interlaced still pictures.

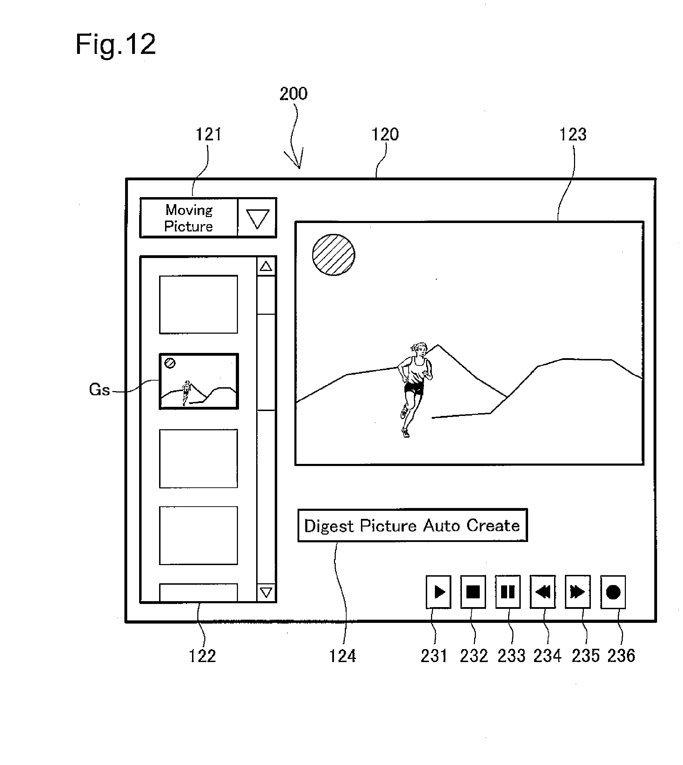

FIG. 12 is an illustration depicting the operation display screen 200 in the picture file creation process displayed on the display 18a. The operation display screen 200 includes a source picture data type selection switch 121 for selecting a type of source picture data targeted for processing; a source picture data selection window 122 for selecting one source picture data of the selected type; a picture display area 123 for displaying the picture represented by the source picture data targeted for processing; and control buttons for the still picture data generating process. In the example of FIG. 12, moving picture data Gs is shown as having been selected in the source picture data selection window 122.

The control buttons for the digest picture data generating process from moving picture data include a Digest Picture Auto Create button 124 for automatically creating digest picture data; and various buttons for controlling moving pictures displayed in the picture display area 123 and for digest manual creation. The buttons for controlling moving pictures include a Play button 231, a Stop button 232, a Pause button 233, a Rewind button 234, a Fast Forward button 235, and a Moving Picture Extract button 236. The Moving Picture Extract button 236 is a button used for extracting moving picture data manually.

In the system configuration described above, pressing the Digest Picture Auto Create button 124 causes some moving picture data to be extracted from the moving picture data in the manner indicated below, as well as automatically generating digest picture data by means of concatenating the multiple extracted moving picture data.

C. Digest Picture Data Generation Process in Embodiment 2 of the Invention:

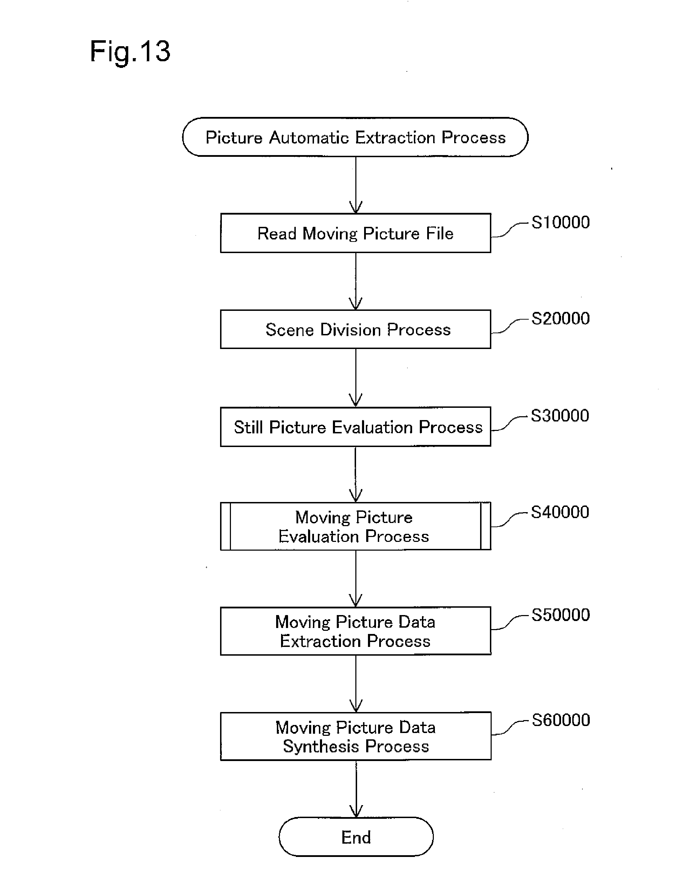

FIG. 13 is a flowchart depicting the content of the digest picture data generation process in Embodiment 2. In Step S10000, the picture processing application program 10 (FIG. 11) receives supply of moving picture data from the moving picture database portion 30. The supplied moving picture data is buffered in memory (not shown), as well as being displayed in the picture display area 123 (FIG. 12).

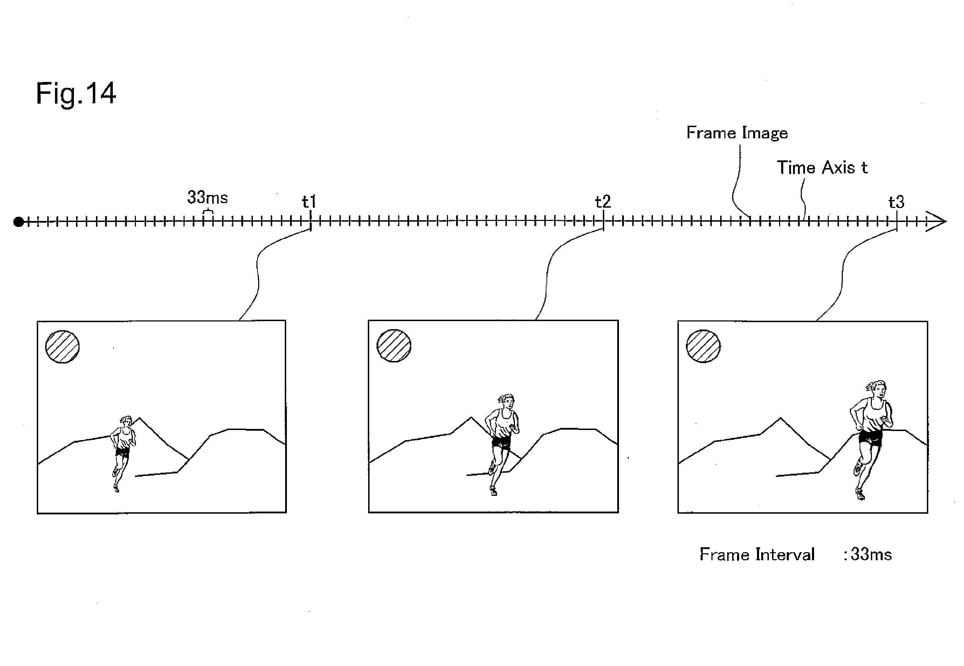

FIG. 14 an illustration depicting an example of the arrangement of moving picture data used an embodiment of the invention. The moving picture data is a collection of chronologically consecutive frame picture data with a single-frame time of 33 ms, with each frame of picture data being assigned a frame number in chronological order. In the example of FIG. 14, a marathon runner is shown running.

In Step S20000, the scene division module 11 executes a scene division process. The scene division process is a process for dividing the moving picture data on a per-scene basis. In this embodiment, "per-scene" refers to the interval between the start of recording and the stop of recording of the camera during acquisition of moving picture data. That is, each scene begins at the start of recording and ends at the stop of recording. The scene division process can be accomplished, for example, through recognition of sudden changes in the pictures.

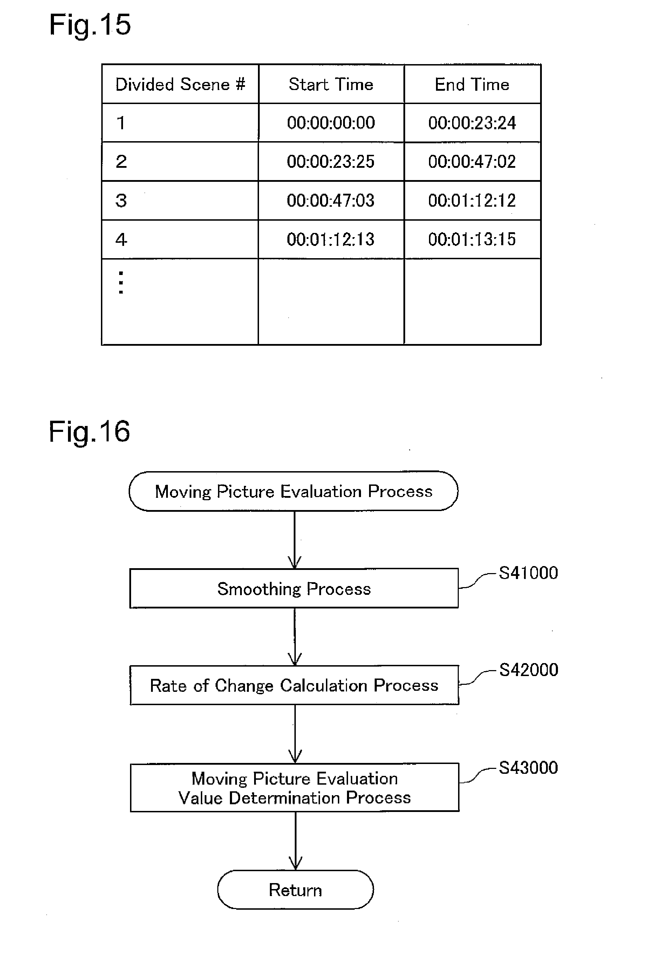

FIG. 15 is a chart showing results of the scene division process in Embodiment 2 of the invention. In this chart, the divided scene number is the number appended to each scene in chronological order. Start time and end time indicate the start time and end time of each scene, with four sets of two-digit numbers. Specifically, the initial two-digit number indicates hours, the next two-digit number indicates minutes, the next two-digit number indicates seconds, and the last two-digit number indicates frame number within each second. For example, scene #4 is composed of a collection of frames from 0 hours, 1 minute, 12 seconds, frame #13 to from 0 hours, 1 minute, 13 seconds, frame #15.

In Step S30000 (FIG. 13), the picture evaluation module 12 executes a frame picture evaluation process. The frame picture evaluation process is a process for quantifying the importance of still pictures represented by frame picture data, through conversion to still picture evaluation values. Various methods may be used as methods for this evaluation; for example, it is possible to use the methods disclosed in Japanese Unexamined Patent Application 2002-142189 or Japanese Unexamined Patent Application 10-224736. Conventionally, importance of a moving picture was determined according to the importance of each of the plurality of still pictures making up the moving picture.

In Step S40000, the picture evaluation module 12 executes a moving picture evaluation process. The moving picture evaluation process differs from the evaluation method discussed above, in that the evaluation method individually evaluates the still picture data making up the moving picture, while taking into consideration the individual chronological information of the plurality of still pictures making up the moving picture.

FIG. 16 is a flowchart depicting the specifics of the evaluation value calculation process in Embodiment 2 of the invention. In Step S41000, the picture evaluation module 12 carries out a smoothing process for the still picture evaluation values. The smoothing process can be carried out using a moving average filter, for example. By so doing, the still picture evaluation values can be chronologically smoothed.

In Step S42000, the picture evaluation module 12 executes a rate of change calculation process. The rate of change calculation process is a process for calculating the rate of change in still picture evaluation values that have been smoothed by the smoothing process. This rate of change can represent that the importance of each still picture gradually increases towards a peak picture in which importance peaks, or that the peak picture has been passed. A moving picture going towards a peak picture is important as a moving picture of a preparatory period leading up to the peak picture. On the other hand, in most cases a picture coming after the peak picture has passed is of little interest to the user, despite its high importance as a still picture unit. Thus, by extracting in a focused manner the moving picture data that precedes a peak picture, it is possible to generate the digest picture data desired by the user.

In Step S43000, the picture evaluation module 12 executes a moving picture evaluation value determining process. Here, "moving picture evaluation values" are values representing evaluation of still picture data as part of a moving picture; they differ from still picture evaluation values evaluated in still picture data units. In this embodiment, the moving picture evaluation value determining process is a process that uses still picture evaluation values and the rate of change of still picture evaluation values to determine evaluation values for frame images as part of a moving picture. Specifically, for example, taking note of the sign of the rate of change of a still picture evaluation value, in the event that the rate of change of the still picture evaluation value is positive, the still picture evaluation value is determined as-is, whereas in the event that the rate of change of the still picture evaluation value is negative, the still picture evaluation value is determined to be zero across the board. The "moving picture evaluation value" corresponds to the second moving picture evaluation value recited in the Claims.

In Step S50000 (FIG. 13), the moving picture data extraction module 13 executes a moving picture data extraction process. The moving picture data extraction process is a process for extracting a collection of multiple consecutive frame picture data whose moving picture evaluation values are greater than a predetermined threshold value th.

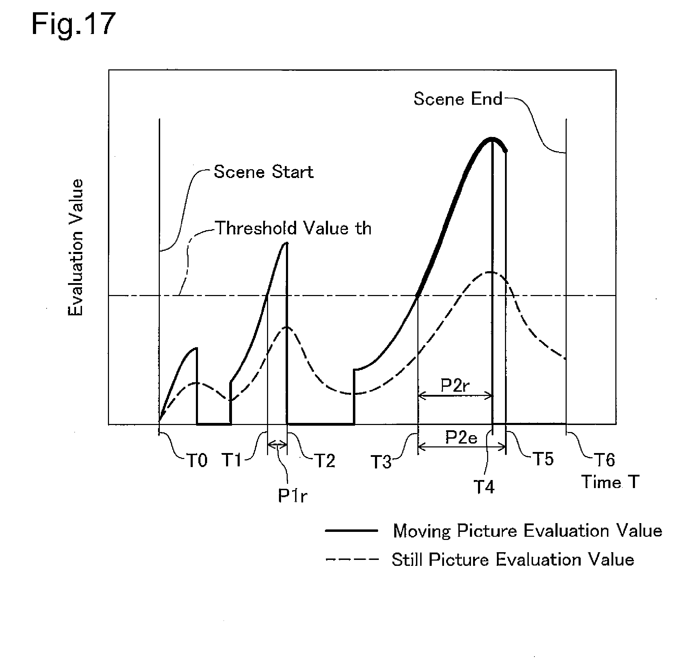

FIG. 17 is a flowchart depicting the specifics of the moving picture data extraction process in Embodiment 2 of the invention. The drawing depicts a still picture evaluation value and a moving picture evaluation value in a single scene divided by means of the scene division process. In the drawing, the two are more readily distinguished by making the moving picture evaluation value double the still picture evaluation value, in the case where the rate of change of still picture evaluation value is positive. Where the rate of change of still picture evaluation value is negative, on the other hand, the still picture evaluation value is set to zero across the board.

As will be understood from FIG. 17, during the time period P1r from time T1 to time T2, and during the time period P2r from time T3 to time T4, the moving picture evaluation value exceeds the threshold value th. These two time periods P1r, P2r are time periods containing moving picture data that is a candidate for extraction. In this embodiment, data shorter than a predetermined time period is excluded from among candidate moving picture data. This is because extremely short moving pictures are typically not desired by the user. In this example, time period P2r is part of the extraction time period targeted for extraction in this scene.

The time period targeted for extraction is extended for a predetermined time beyond the peak picture. Specifically, the time period targeted for extraction is modified from time period P2r to time period P2e. This is because for a moving picture, rather than having the scene switch immediately after the peak image, it is preferable to instead have the moving picture continue for a little while after the peak image so that the moving picture does not terminate during the peak. In this way, it is possible to extract moving picture data through focused extraction on the time prior to the peak image, and not only prior to the peak image.

In Step S60000, the moving picture data concatenation module 14 executes a moving picture data concatenation process. The moving picture data concatenation process is a process for concatenating the extracted multiple moving picture data in chronological order. Moving picture data concatenated in this way constitutes digest picture data.

In this way, in Embodiment 2, since focused extraction of pictures preceding a picture having peak picture importance is possible, the digest picture data desired by the user can be generated by carrying out chronological consideration of still pictures. Additionally, since the process is carried out noting only the sign of the rate of change of a still picture evaluation value, there is the additional advantage that a high speed process is possible.

Whereas in Embodiment 2 the still picture evaluation value is set to zero across the board in the event that the rate of change of still picture evaluation value is negative, it would be possible to instead determine moving picture evaluation values based on any of the following, or a combination thereof, for example.

(1) Values derived by increasing still picture evaluation values of multiple still picture data whose chronological rate of change of a still picture evaluation value is positive may be designated as moving picture evaluation values.

(2) Values derived by decreasing still picture evaluation values of multiple still picture data whose chronological rate of change of a still picture evaluation values is negative may be designated as moving picture evaluation values.

Methods for increasing still picture evaluation values include a method of adding a predetermined positive value, or a method of multiplication by a coefficient which is a value greater than 1, for example. On the other hand, methods for decreasing still picture evaluation values include a method of subtracting a predetermined positive value, or a method of multiplication by a coefficient having a value less than 1.

D. Digest Picture Data Generation Process in Embodiment 3 of the Invention:

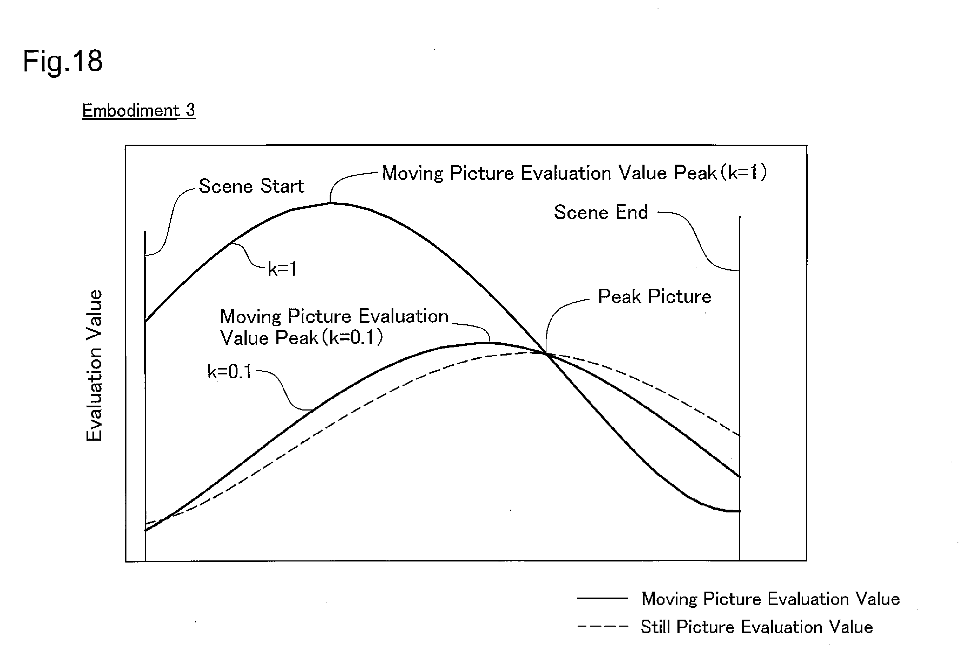

FIG. 18 is a flowchart depicting the specifics of the moving picture data extraction process in Embodiment 3 of the invention. Embodiment 3 differs from Embodiment 2 only in terms of the method for determining moving picture evaluation values, with other arrangements being the same. The method for determining moving picture evaluation values in Embodiment 3 is a method of calculating the sum of a still picture evaluation value and a value derived by multiplying a predetermined positive coefficient k by the rate of change of the still picture evaluation value. A still picture evaluation value and two moving picture evaluation values calculated in this manner are shown. The two moving picture evaluation values represent moving picture evaluation values for each of the coefficients k, derived by calculation using two predetermined coefficients k.

As will be understood from FIG. 18, the moving picture evaluation value peak moves chronologically forward relative to the still picture evaluation value. In this way, in the moving picture evaluation value determination process of Embodiment 3 as well, the still picture evaluation value peak moves chronologically forward, resulting in focused extraction of pictures chronologically prior to the peak picture.

In contrast to Embodiment 2, the extent of peak movement can be adjusted easily by means of manipulating the predetermined positive coefficient k. As will be understood from FIG. 18, this is because the extent of peak movement tends to increase with a larger predetermined positive coefficient k, while the extent of peak movement tends to decrease with a smaller predetermined positive coefficient k.

In this way, Embodiment 3 permits easy adjustment, by means of manipulation of the predetermined positive coefficient k, of the extent to which focused extraction of pictures takes place chronologically prior to the peak picture. This adjustment can be established according to the photographic subject intended by the user, for example. Specifically, the appropriate level of adjustment will differ depending on whether the photographic subject intended by the user is a human subject having a large dynamic element, or a landscape having a small dynamic element.

Experimentation conducted by the inventors has shown that the predetermined coefficient is preferably set between 0 and 1.

E. Digest Picture Data Generation Process in Embodiment 4 of the Invention:

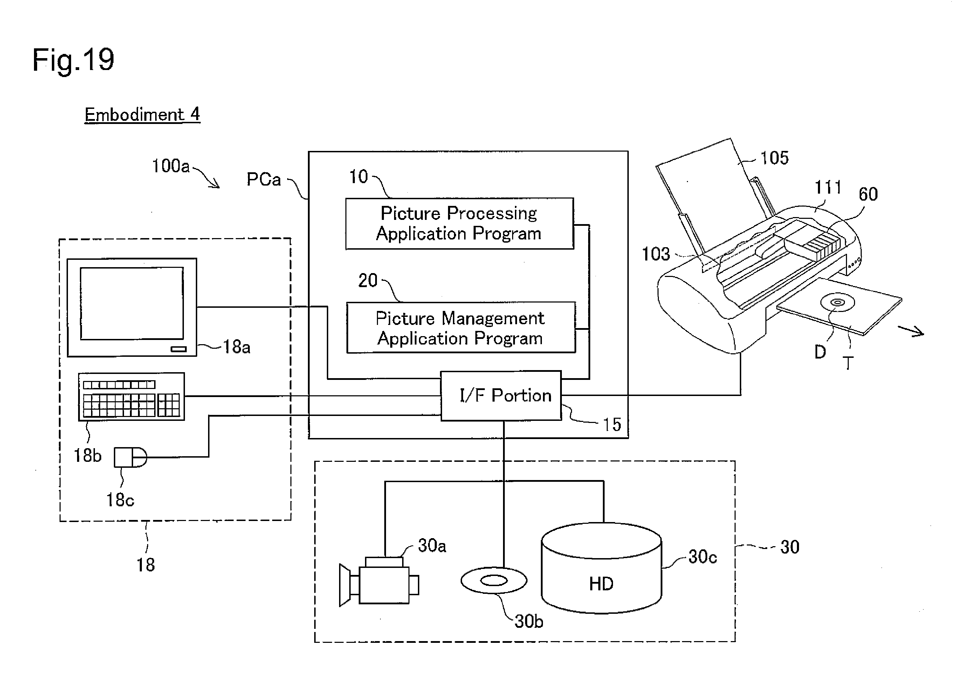

FIG. 19 is an illustration depicting the picture management system 100a in Embodiment 4 of the invention. The picture management system 100a differs from the picture management system 100 (FIG. 11) in the following respects. Specifically, firstly, a picture management application program 20a is installed on a personal computer PCa. Secondly, a printing device 111 able to perform printing of moving picture data to a recording medium (e.g. DVD-R) is connected to the personal computer PCa.

The printing device 111 comprises a print head unit 60, a paper tray 105, and a manual paper feed opening 103. The paper feed opening 103 is used when printing onto media that cannot be bent, such as thick paper or an optical disk like recording medium D. When carrying out printing onto recording medium D, the recording medium D, having been placed in a tray T for recording media, is inserted into the paper feed opening 103 as shown in the drawing, and printing is performed. The picture management application program 20 can create and administer a database of picture data stored on recording media.

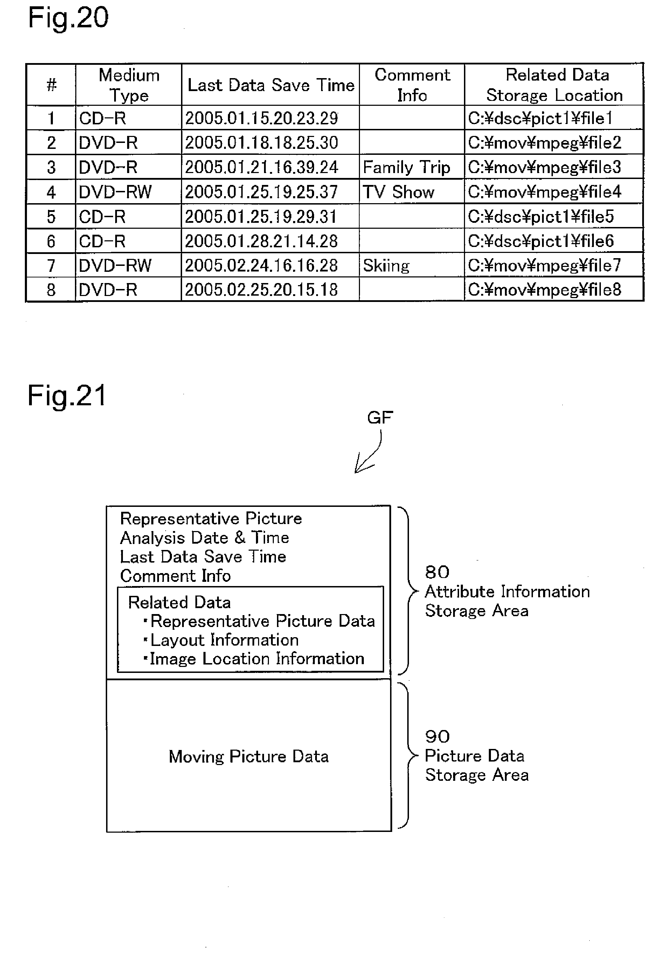

FIG. 20 is an illustration depicting the contents of a database in picture management of Embodiment 4 of the invention. In this example, eight records composed of four fields are stored in the database. The four fields contain recording medium type, last data storage time, comment information, and related data storage location. For example, the data of record #3 stores DVD-R; 1/21/2005 16:39:24; family trip; and a directory (C:¥mov¥mpeg¥file¥3), as recording medium type, last data save time, comment information, and related data storage location, respectively. Records are recorded in association with individual recording media.

FIG. 21 is an illustration depicting the contents of a data file GF stored in a recording medium in Embodiment 4 of the invention. The data file GF includes an attribute information storage area 80 and a picture data storage area 90. Data corresponding to the fields of the database described above is stored in the attribute information storage area 80. Digest picture data generated in the embodiments discussed above is stored in the picture data storage area 90.

The last data save time records, up to the second, the time that moving picture data was last saved onto the recording medium. Utilizing the fact that the identical data is unlikely to exist, making the data unique, last data save time can be used as an identification control number for a recording medium. Comment information is information that can be input freely by the user. Related data storage location is data indicating a directory in the hard disk 30c (FIG. 19) where related data is stored.

In this embodiment, representative picture data, layout information, and picture location information are included at the related data storage locations. As representative picture data it is possible to utilize, for example, low-resolution data of the still picture data with the highest evaluation value in each scene; or low-resolution, short moving picture data that includes still picture data. As layout information there may be used, for example, data representing a layout for printing multiple representative picture data onto a recording medium. As picture location information there may be used, for example, information identifying a scene containing representative picture data, or start time within a scene.

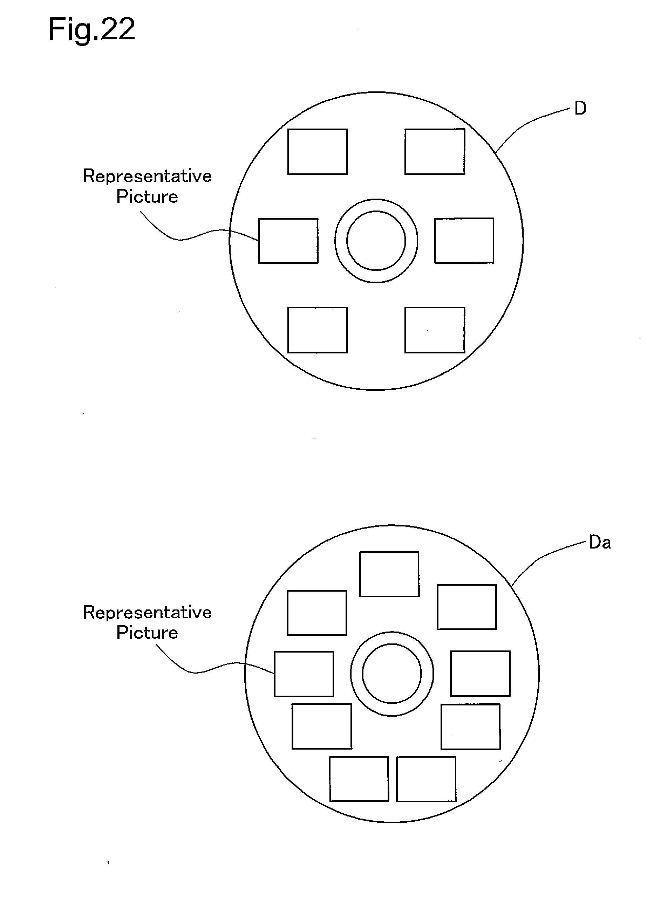

FIG. 22 is an illustration depicting two index pictures printed on a recording media. Recording medium D and recording medium Da respectively have six and nine representative pictures printed on them, as index pictures. The index pictures are for the purpose of the user to ascertain the contents of the recording media, as well as being used to identify the recording media. The picture management application program 20a may also display index pictures on the display 18a, using the representative picture data the layout information.

For example, there can be employed an arrangement whereby, when the user has discovered desired moving picture data by means of using the picture management application program 20a to search the database (FIG. 20), index pictures are displayed on the display 18a so that the desired recording medium can be identified.

In preferred practice, index pictures including representative pictures will be printed as printed images having gradation that becomes lighter in the peripheral portions, e.g. towards the outline of the picture. This is done in order to reduce deterioration in picture quality of printed pictures printed onto a recording media, due to mispositioned printing. This is because typically, is it the nature of printed pictures printed onto recording media to tend (1) to have small margins, and (2) to experience relatively large mispositioning of printing; whereby deterioration in picture quality of printed pictures on a recording media due to mispositioned printing tends to be appreciable, i.e. to stand out noticeably.

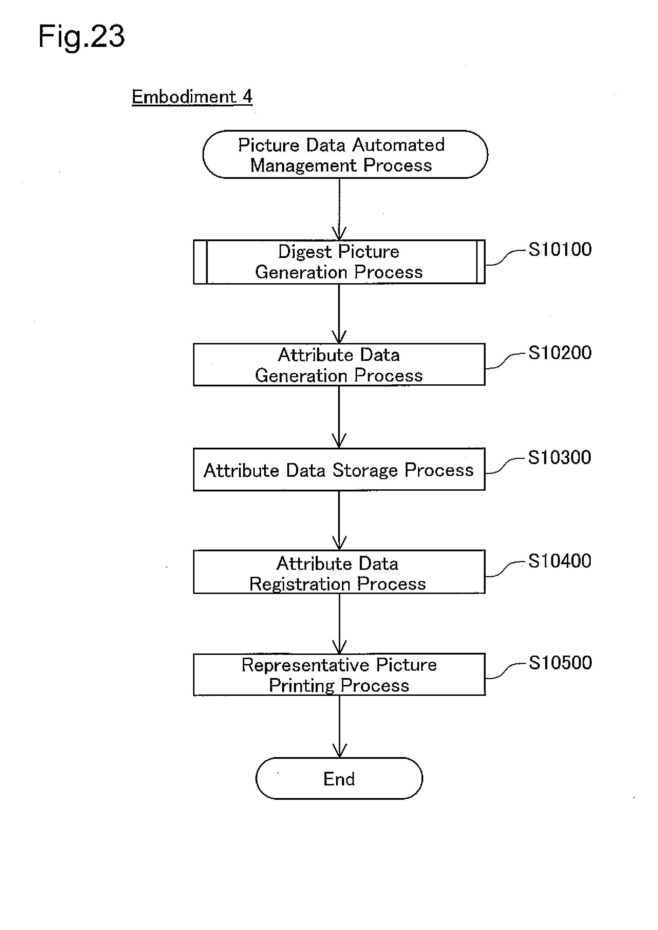

FIG. 23 is an illustration depicting the specifics of the picture data automated management process in Embodiment 4 of the invention. The picture data automated management process may be arranged so that after the moving picture data has been stored on DVD-R, for example, it starts up automatically in response to a finalization process command by the user.

In Step S10100, the picture processing application 10 (FIG. 19) executes the digest picture generation process by the methods disclosed in Embodiments 1 to 3, to generate digest picture data that includes representative picture data.

The representative picture data is generated as still picture data or (short, low-resolution) moving picture data at the time that the evaluation value reaches its peak, as described previously. The representative picture data may be constituted so that a predetermined number of data are generated automatically, or so that candidate representative picture data is generated for selection by the user.

In Step S10200, the picture processing application 10 (FIG. 19) executes an attribute data generation process. The attribute data generation process is a process for generating data other than the representative picture data stored in the attribute information storage area 80 (FIG. 21).

Layout information is information for generating printed pictures such as those as shown in FIG. 22, for example. The layout information can be constituted so as to include information identifying representative picture size and location in the printed pictures.

The representative picture analysis date and time can be generated, for example, by acquiring from the internal clock (not shown) of the PCa the date and time that generation of the representative picture data was completed. The last data save time can be generated similarly, on the basis of the date and time that moving picture data was last written. Comment information is input via a user interface, not shown.

In Step S10300, the picture management application program 20 executes an attribute data save process. The attribute data save process is a process for saving the generated attribute information onto a recording medium. In this embodiment, once all attribute information has been saved to the recording medium, a finalization process is executed automatically.

In Step S10400, the picture management application program 20 executes an attribute data registration process. The attribute data registration process is a process for registering the generated attribute information as a record in the database. By so doing, moving picture data saved on a large number of recording media not loaded into the personal computer PCa can nonetheless be managed on the hard disk 30c.

In Step S10500, the picture management application program 20 executes a representative picture printing process. The representative image printing process prints index pictures including representative pictures like those depicted in FIG. 22, onto a recording medium (e.g. a DVD-R).

By so doing, once the user identifies desired moving picture data by means of an audio search or text search using the picture management application program 20, or in the future using video search by pattern matching or the like as search means, the user may be provided with index pictures of the recording medium on which the moving picture data in question is stored. The index pictures are provided by means of display on the display 18a, or by printing out onto printer paper. Using the provided index pictures, the user may easily identify the recording medium.

In this way, by printing representative picture data onto recording media and administering the database with attribute data that includes the representative picture data, the burden imposed on the user in managing moving picture data may be alleviated appreciably. Additionally, pictures can also be printed on the basis of comment information or other attribute information, for utilization by the user.

Further, in this embodiment, since attribute data is stored on the recording medium as well, it is a simple matter to register the data in a database belonging to another personal computer. For example, by storing a registration agent on the recording medium, it is possible to have an arrangement whereby the data is registered in the database automatically, simply by loading the recording medium into another computer.

Whereas in this embodiment, attribute information is generated after the last moving picture data has been saved, it is also acceptable to have an arrangement whereby attribute information is updated each time that moving picture data is added, for example.

Additionally, for rewriteable or continually-recordable recording media such as DVD-RW, the system may be designed to monitor whether supplemental processes have been carried out by other picture processing devices. In such instances, it is preferable to display a user interface in order to prompt the user's attention. In preferred practice, this user interface will have the function of asking the user whether to update the attribute information.

Additionally, in cases where no attribute data is included, it is preferable to alert the user that there is no attribute data, as well as to provide an interface permitting the user to issue an attribute data creation instruction.

F. Variation Examples:

The invention is not limited to the embodiments set forth hereinabove, and may be reduced to practice in various other ways without departing from the spirit thereof; for example, the following variations are possible.

F-1. Whereas the embodiments discussed above are constituted so that moving picture data shorter than a predetermined length of time are excluded, it would be acceptable to have an arrangement whereby data is not excluded automatically, but can be excluded manually by the user after digest picture data has been generated automatically. In preferred practice the arrangement will be such that the user can adjust the predetermined length of time mentioned above.

F-2. Whereas in the embodiments discussed above, the extracted multiple moving picture data is concatenated in chronological order, but may instead be determined with reference to still picture evaluation values, determined with reference to moving picture evaluation values, or determined with reference to both, for example.

F-3. Whereas in the embodiments discussed above, after dividing the moving picture data into scenes, extraction of moving picture data is carried out on a scene-by-scene basis, it would be acceptable to carry out processing similar to the preceding embodiments without dividing the data into scenes.

F-4. Whereas in the embodiments discussed above, the predetermined threshold value th used as the criterion for extracting moving picture data is constant, it would be acceptable to calculate an average value of moving picture data evaluation values for each scene, and to vary the predetermined threshold value th on a scene-by-scene basis depending on this average value, for example. By so doing it is possible to extract moving picture data that more closely matches the needs of the user.

Additionally, the predetermined threshold value th may be constituted so that the threshold value th varies on a scene-by-scene basis using both the still picture evaluation value and the moving picture data evaluation value, or the still picture evaluation value alone, rather than the moving picture evaluation value.

F-5. Whereas in the embodiments discussed above, in the event that multiple moving picture data has been extracted, the moving picture data concatenation module 14 (FIG. 11) concatenates the extracted multiple moving picture data to generate digest image data, the invention could instead be constituted as a moving picture data processing method in which extracted multiple moving picture data is presented to the user individually without being concatenated, for example.

F-6. Whereas the embodiments discussed above disclose arrangements wherein index pictures including representative pictures are printed as printed images with gradation, it would be possible to apply a similar arrangement to other printed images, namely text for example.

In preferred practice, the arrangement will be one whereby the user can freely select whether to apply gradation to printed images (for example, by providing an interface screen that allows the user to select whether to apply gradation). In this case, an arrangement wherein printing with applied gradation is the initial setting, an arrangement wherein printing without applied gradation is the initial setting, or an arrangement wherein the range and extent of gradation can be modified would be acceptable.

F-7. Whereas in the embodiments discussed above, the moving picture data is composed of non-interlaced frame picture data, the invention can also be applied to interlaced frame picture data. In this case, the frame picture data described in the preceding embodiments would correspond to still picture data generated from still picture data of odd-numbered field composed of image data of odd-numbered scan lines, and still picture data of even-numbered field composed of image data of even-numbered scan lines.

Some of the arrangements realized through hardware in the embodiments discussed above may be replaced by software, and conversely some of the arrangements realized through software may be replaced by hardware.

Where some or all of the functions of the invention are realized through software, the software (computer program) can be provided in a form stored on computer-readable recording media. In this invention, "computer-readable recording media" is not limited to portable recording media such as flexible disks or CD-ROM, but include also computer internal memory devices such as various kinds of RAM and ROM, as well as external memory devices fixed in a computer, such as a hard disk.

The following two Japanese patent applications are the basis for the priority claim of this Application, and are incorporated herein by reference.

(1) Unexamined Patent Application 2004-60004 (filed 3/4/2004)
(2) Unexamined Patent Application 2004-74298 (filed 3/16/2004)

INDUSTRIAL APPLICABILITY

This invention is applicable to moving picture data processing technology.

**Claims**

**1.** A moving picture data processing method for extracting a portion of moving picture data from moving picture data, the method comprising:

a frame picture evaluation step of evaluating each of a plurality of frame picture data included in the moving picture data on a basis of a specific condition, for generating first picture evaluation values depending on the evaluations; and
a moving picture data extraction step of extracting moving picture data including a plurality of frame picture data that meet a specific condition, in response to the first picture evaluation values.

**2.** The moving picture data processing method in accordance with Claim 1, further comprising:

an acquiring step of acquiring the moving picture data, wherein
the moving picture data extraction step includes the step of extracting at least one frame group that is a collection of chronologically consecutive frame picture data, from among the frame picture data having at least one of the first evaluation value and a change of the first evaluation value, the one meeting a specific condition, wherein
the method further comprises a digest moving picture data generation step of generating digest moving picture data using at least a portion of the extracted frame group.

**3.** The moving picture data processing method in accordance with Claim 2, further comprising:

a dividing step of dividing the moving picture data to establish a plurality of scenes, each of the plurality of scenes containing a plurality of frames of the picture data, wherein
the moving picture data extraction step includes the step of extracting at least one of the frame groups from each of the scenes.

**4.** The moving picture data processing method in accordance with Claim 3, wherein
the dividing step includes the step of dividing the moving picture data based on a discontinuous change in the first evaluation value.

**5.** The moving picture data processing method in accordance with Claim 2, wherein

the specific condition is that the first evaluation value is at least equal to a specific threshold value.

6. The moving picture data processing method in accordance with Claim 5, further comprising:

a playback time input step of inputting a desired value of playback time of the digest moving picture data; and an adjusting step of adjusting the threshold value in response to the desired value of playback time.

7. The moving picture data processing method in accordance with Claim 2, further comprising:

the moving picture data extraction step includes the step of extracting a frame group whose rate of change of the first evaluation value is at least 0.

8. The moving picture data processing method in accordance with Claim 2 , wherein the moving picture data extraction step includes the step of assembling two frame groups and all frame picture data between the two frame groups, a time interval between the two frame groups being smaller than a specific value, for extracting as a single frame group.

9. The moving picture data processing method in accordance with Claim 8, further comprising:

a scene dividing step of dividing the moving picture data to establish a plurality of scenes, each of the plurality of scenes containing a plurality of the frame picture data, wherein the moving picture data extraction step further includes the step of extracting the two frame groups and all frame picture data between the two frame groups as a single frame group, when the two frame groups and the all frame picture data between the two frame groups are within the same scene.

10. The moving picture data processing method in accordance with Claim 2, wherein the moving picture data extraction step includes the step of the frame group composed of at least a specific number of frame picture data.

11. The moving picture data processing method in accordance with any of Claims 2 to 10, wherein the frame picture evaluation step includes the step of calculating the first evaluation value using a motion vector calculated by comparing two frames of picture data that include the frame picture data targeted for calculation of the first evaluation value.

12. The moving picture data processing method in accordance with Claim 1, further comprising:

a moving picture evaluation step of generating a second picture evaluation value for each of the plurality of frame picture data, in response to the first picture evaluation value of each of the plurality of frame picture data and to the chronological rate of change of the first evaluation value of each of the plurality of frame picture data, wherein the moving picture data extraction step includes the step of extracting moving picture data composed of the plurality of frame picture data whose second evaluation values are greater than a specific threshold value from the moving picture data, based on the second picture evaluation value.

13. The moving picture data processing method in accordance with Claim 12, wherein the moving picture data extraction step has an evaluation mode wherein an elevated value of the first picture evaluation value of the plurality of frame picture data whose chronological rate of change of the first evaluation value is positive is designated as the second picture evaluation value.

14. The moving picture data processing method in accordance with any of Claims 12 and 13, wherein the moving picture data extraction step has an evaluation mode wherein an lowered value of the first picture evaluation value of the plurality of frame picture data whose chronological rate of change of the first evaluation value is negative is designated as the second picture evaluation value.

15. The moving picture data processing method in accordance with any of Claims 12 to 14, wherein the moving picture data extraction step has an evaluation mode wherein the sum of the first picture evaluation value and a value derived by multiplying the chronological rate of change of the first picture evaluation value by a specific positive coefficient is designated as the second picture evaluation value.

**16.** The moving picture data processing method in accordance with Claims 15, wherein the specific positive coefficient is a value of less than 1.

**17.** The moving picture data processing method in accordance with any of Claims 12 to 16, wherein the moving picture data extraction step has an evaluation mode for extracting moving picture data composed of the plurality of frame picture data whose second picture evaluation value is greater than a threshold value, the moving picture data also having playback time longer than a specific time from the moving picture data, based on the second picture evaluation value.

**18.** The moving picture data processing method in accordance with any of Claims 12 to 17, further comprising:

a scene dividing step of dividing the moving picture data on a scene to scene basis, wherein the moving picture data extraction step includes the step of extracting with respect to each scene.

**19.** The moving picture data processing method in accordance with Claims 18, wherein the moving picture data extraction step includes the step of calculating, with respect to each scene, an average value of at least one of the first picture evaluation value and the second picture evaluation value, and vary the specific threshold value with respect to the each scene based on the average value.

**20.** A digest moving picture data generating method for generating digest moving picture data by extracting a portion from moving picture data, the method comprising:

the moving picture data processing method in accordance with any of Claims 12 to 19; and a moving picture data concatenation step of concatenating the plurality of moving picture data to generate the digest moving picture data when the plurality of moving picture data are extracted.

**21.** The moving picture data processing method in accordance with Claims 20, wherein the moving picture data concatenation step has a concatenation mode for concatenating chronologically the extracted plurality of moving picture data.

**22.** The moving picture data processing method in accordance with any of Claims 20 and 21, wherein the moving picture data concatenation step has a concatenation mode for concatenating the extracted plurality of moving picture data, in an order determined with reference to at least one of the first picture evaluation value and second picture evaluation value of the plurality of frame picture data making up each of the extracted plurality of moving picture data.

**23.** A printing method for printing on a recording medium storing moving picture data, comprising:

the moving picture data processing method in accordance with any of Claims 1 to 19; and a printing step of printing on the recording medium in response to at least a portion of the plurality of frame picture data.

**24.** A recording method for recording moving picture data and attribute information of the moving picture data into a recording medium, comprising:

recording the moving picture data into the recording medium; the moving picture data processing method in accordance with any of Claims 1 to 19; generating the attribute information including data generated in response to at least a portion of the plurality of frame picture data; and recording the generated attribute information into the recording medium.

**25.** A moving picture data processing apparatus for extracting a portion of moving picture data from moving picture data, the apparatus comprising:

a frame picture evaluator that evaluates each of a plurality of frame picture data included in the moving picture data on a basis of a specific condition, for generating first picture evaluation values depending on the evaluations; and a moving picture data extractor that extracts moving picture data including a plurality of frame picture data that meet a specific condition, in response to the first picture evaluation values.

26. A printing apparatus for printing on a recording medium storing moving picture data, comprising:

a frame picture evaluator that evaluates each of a plurality of frame picture data included in the moving picture data on a basis of a specific condition, for generating first picture evaluation values depending on the evaluations;
a moving picture data extractor that extracts frame picture data that meet a specific condition, in response to the first picture evaluation values; and
a printing unit that prints on the recording medium in response to the frame picture data.

27. A computer program for causing a computer to extract a portion of moving picture data from moving picture data, the computer program comprising:

a program for the computer to evaluate each of a plurality of frame picture data included in the moving picture data on a basis of a specific condition, for generating first picture evaluation values depending on the evaluations; and
a program for the computer to extract moving picture data including a plurality of frame picture data that meet a specific condition, in response to the first picture evaluation values.

28. A computer program for causing a computer to print on a recording medium storing moving picture data, the computer program comprising:

a program for the computer to evaluate each of a plurality of frame picture data included in the moving picture data on a basis of a specific condition, for generating first picture evaluation values depending on the evaluations;
a program for the computer to extract frame picture data that meet a specific condition, in response to the first picture evaluation values; and
a program for the computer to print on the recording medium in response to the frame picture data.

29. A computer program product for causing a computer to generate an image file, the computer program product comprising:

a computer readable medium; and
the computer program in accordance with any of Claims 27 and 28 stored in the computer readable medium.

## Fig.1

Prior Art

EP 1 657 923 A1

# Fig.2

100

150

120

130

140

150

30

102
Condensed Moving Picture
Generation Control Module

104
Data Acquisition Module

106
Scene Division Module

107
Motion Detection Module

108
Evaluation Value
Calculation Module

109
Extraction Module

110
Condensed Moving
Picture Generation Module

101
Moving
Picture
Database

# Fig.3

(a)

(b)

Evaluation Value
Zoom

Time

(c)

Evaluation Value
Pan

Time

(d)

Evaluation Value
Still

Time

(e)

Evaluation Value
Moving Body
Location

Time

(f)

Evaluation Value
Moving Body
Size

Time

(g)

Evaluation Value
Skin Tone
Area Size

Time

# Fig.4

(a) Zoom-In

(b) Zoom-Out

(c) Pan

# Fig.5

## Fig.6

# Fig.7

```
        ┌─────────┐
        │  Start  │
        └─────────┘
             │                         S100
             ▼
 ┌───────────────────────┐
 │  Acquire Moving Picture│
 │  Data, Playback Time   │
 └───────────────────────┘
             │                         S200
             ▼
 ┌───────────────────────┐
 │  Divide Moving Picture │
 │  Data Into Scenes      │
 └───────────────────────┘
             │                         S300
             ▼
 ┌───────────────────────┐
 ║  Detect Motion of      ║
 ║  Frame Pictures        ║
 └───────────────────────┘
             │                         S400
             ▼
 ┌───────────────────────┐
 │  Calculate Evaluation  │
 │  Values of Frame Pictures│
 └───────────────────────┘
             │                         S500
             ▼
 ┌───────────────────────┐
 ║  Extract Frame         ║
 ║  Groups                ║
 └───────────────────────┘
             │                         S600
             ▼
 ┌───────────────────────┐
 │  Generate Condensed    │
 │  Moving Picture Data   │
 └───────────────────────┘
             │                         S700
             ▼
 ┌───────────────────────┐
 │        Output          │
 └───────────────────────┘
             │
             ▼
        ┌─────────┐
        │   End   │
        └─────────┘
```

# Fig.8

Detect Motion of
Frame Pictures

↓

Detect Shift S of Entire Frame Picture of Frame
Picture (n-1) Vs. Frame Picture N

Frame Picture(n-1)  Frame Picture n

S301

↓

Divide Frame Picture N And Frame Picture
(n ? 1) Into Multiple Blocks

Frame Picture(n-1)   Frame Picture n

S302

↓

Detect Shift Sb of Corresponding Blocks

Sb
Sb
Frame Picture n

S303

↓

Calculate Motion Vector m of Blocks From
Difference of Block Shift Sb and Overall Shift S

m
Frame Picture n

S304

↓

Detect Block (Moving Body Block) whose
Motion Vector M Exceeds
a Predetermined Threshold Value

Frame Picture n

S305

↓

Return

# Fig.9

```
        ┌─────────────────┐
        │  Extract Frame  │
        │     Groups      │
        └─────────────────┘
                 │
                 ▼
        ┌─────────────────┐    ─ S501              ─ S515
        │ Extract Candidate│            ┌──────────────────────┐
        │   Frame Groups   │            │ Return to Initial Scene│
        └─────────────────┘            └──────────────────────┘
                 │         ─ S502              ▲        ─ S514
        ┌─────────────────┐            ┌──────────────────────┐
        │ Select Frame Group│           │ Adjust Threshold Value │
        └─────────────────┘            └──────────────────────┘
                 │                              ▲
                 ▼        ─ S512                │
              ╱       ╲                         │
             ╱ 1 or More ╲    NO                │
            ╱ Frame Groups ╲──────────────────┘
            ╲   in Scene   ╱
             ╲     ?     ╱
              ╲       ╱
            YES │        ─ S516
        ┌─────────────────┐
        │ Select Frame Group│
        │with Largest Evaluation│
        │   Value Sum     │
        └─────────────────┘
                 │        ─ S517
              ╱     ╲        YES
             ╱ Last Data ╲──────────────┐
             ╲    ?    ╱                 ▼        ─ S519
              ╲     ╱                 ╱       ╲     YES
            NO │                     ╱ Total Frame ╲
               │   S518             ╱ Count in Desired╲──────┐
        ┌─────────────────┐        ╲    Range    ╱          │
        │ Move to Next Scene│        ╲     ?    ╱           │
        └─────────────────┘          NO │    ─ S520          │
                 │           ┌──────────────────────┐        │
                 │           │ Adjust Threshold Value │       │
                 │           └──────────────────────┘        │
                 │                    │      ─ S522           │
                 │           ┌──────────────────────┐        │
                 │           │ Return to Initial Data │       │
                 │           └──────────────────────┘        │
                 ▼                    │                       │
                 └────────────────────┴───────────────────────┘
                              │
                              ▼
                     ┌─────────────────┐
                     │     Return      │
                     └─────────────────┘
```

# Fig.10

```
        ┌─────────────────┐
        │   Frame Group   │
        │    Selection    │
        └────────┬────────┘
                 │
                 ▼              S503
            ╱─────────╲
           ╱  2 or More ╲
          ╱  Frames Present╲
          ╲   in 1 Scene  ╱  ──── YES ──────────┐
           ╲     ?      ╱                         │
            ╲─────────╱                           │
              NO │           S504                 │
                 ▼                                │
        ┌─────────────────┐                       │
        │   Check Frame   │                       │
        │  Group Interval │                       │
        └────────┬────────┘                       │
                 │              S505              │
                 ▼                                │
            ╱─────────╲                           │
           ╱  Interval > ╲    NO                  │
          ╱ Predetermined Value╲─────┐            │
          ╲      ?       ╱           │   S506     │
           ╲─────────╱               ▼            │
              YES │         ┌─────────────────┐   │
                  │         │ Re-Extract Frame │  │
                  │         │     Groups       │  │
                  │         └────────┬─────────┘  │
                  │◄─────────────────┘            │
                  │◄─────────────────────────────┘
                  │              S507
                  ▼                      NO
            ╱─────────╲
           ╱Frame Picture╲
          ╱Data Count > Threshold Value╲──┐
          ╲      ?       ╱                 │  S508
           ╲─────────╱                     ▼
              YES │           ┌─────────────────┐
                  │           │ Exclude Frame Grou│
                  │           │ from Candidates  │
                  │           └────────┬─────────┘
                  │◄───────────────────┘
                  ▼
        ┌─────────────────┐
        │     Return      │
        └─────────────────┘
```

## Fig.11

Embodiment 2

- Scene Division Module — 11
- Picture Evaluation Module — 12
- Moving Picture Data Extraction Module — 13
- Moving Picture Data Concatenation Module — 14
- I/F Portion — 15
- 100
- PC
- 10
- 18a
- 18b
- 18c
- 18
- 30a
- 30b
- 30c
- HD
- 30

EP 1 657 923 A1

# Fig.12

200

121   120   123

Moving
Picture   ▽

Gs

⊘

Digest Picture Auto Create

▶  ■  ▮▮  ◀◀  ▶▶  ●

122   124   231 232 233 234 235 236

# Fig.13

```
        ┌─────────────────────────────────────┐
        │ Picture Automatic Extraction Process │
        └─────────────────────────────────────┘
                          │
                          ▼
            ┌──────────────────────────┐
            │   Read Moving Picture File│─── S10000
            └──────────────────────────┘
                          │
                          ▼
            ┌──────────────────────────┐
            │   Scene Division Process  │─── S20000
            └──────────────────────────┘
                          │
                          ▼
            ┌──────────────────────────┐
            │ Still Picture Evaluation  │─── S30000
            │          Process          │
            └──────────────────────────┘
                          │
                          ▼
            ┌──────────────────────────┐
            │     Moving Picture        │─── S40000
            │   Evaluation Process      │
            └──────────────────────────┘
                          │
                          ▼
            ┌──────────────────────────┐
            │   Moving Picture Data     │─── S50000
            │   Extraction Process      │
            └──────────────────────────┘
                          │
                          ▼
            ┌──────────────────────────┐
            │   Moving Picture Data     │─── S60000
            │   Synthesis Process       │
            └──────────────────────────┘
                          │
                          ▼
                      ┌───────┐
                      │  End  │
                      └───────┘
```

# Fig.14

33ms  t1  t2  Frame Image  Time Axis t  t3

Frame Interval   :33ms

EP 1 657 923 A1

# Fig.15

| Divided Scene # | Start Time | End Time |
|---|---|---|
| 1 | 00:00:00:00 | 00:00:23:24 |
| 2 | 00:00:23:25 | 00:00:47:02 |
| 3 | 00:00:47:03 | 00:01:12:12 |
| 4 | 00:01:12:13 | 00:01:13:15 |
| ⋮ | | |

# Fig.16

Moving Picture Evaluation Process

Smoothing Process — S41000

Rate of Change Calculation Process — S42000

Moving Picture Evaluation Value Determination Process — S43000

Return

# Fig.17

# Fig.18

<u>Embodiment 3</u>

Scene Start

Moving Picture Evaluation Value Peak (k=1)

Scene End

k=1

Peak Picture

Moving Picture Evaluation
Value Peak (k=0.1)

k=0.1

Evaluation Value

——— Moving Picture Evaluation Value

- - - - Still Picture Evaluation Value

EP 1 657 923 A1

# Fig.19

Embodiment 4

**100a** PCa

**10** Picture Processing Application Program

**20** Picture Management Application Program

I/F Portion **15**

18a

18b

18c

**18**

**30a**

**30b**

HD **30c**

**30**

105

111 60

103

D T

EP 1 657 923 A1

# Fig.20

| # | Medium Type | Last Data Save Time | Comment Info | Related Data Storage Location |
|---|---|---|---|---|
| 1 | CD-R | 2005.01.15.20.23.29 | | C:¥dsc¥pict1¥file1 |
| 2 | DVD-R | 2005.01.18.18.25.30 | | C:¥mov¥mpeg¥file2 |
| 3 | DVD-R | 2005.01.21.16.39.24 | Family Trip | C:¥mov¥mpeg¥file3 |
| 4 | DVD-RW | 2005.01.25.19.25.37 | TV Show | C:¥mov¥mpeg¥file4 |
| 5 | CD-R | 2005.01.25.19.29.31 | | C:¥dsc¥pict1¥file5 |
| 6 | CD-R | 2005.01.28.21.14.28 | | C:¥dsc¥pict1¥file6 |
| 7 | DVD-RW | 2005.02.24.16.16.28 | Skiing | C:¥mov¥mpeg¥file7 |
| 8 | DVD-R | 2005.02.25.20.15.18 | | C:¥mov¥mpeg¥file8 |

# Fig.21

GF

Representative Picture
Analysis Date & Time
Last Data Save Time
Comment Info

Related Data
· Representative Picture Data
· Layout Information
· Image Location Information

80
Attribute Information
Storage Area

Moving Picture Data

90
Picture Data
Storage Area

## Fig.22

Representative
Picture

D

Representative
Picture

Da

# Fig.23

Embodiment 4

```
┌─────────────────────────────┐
│   Picture Data Automated    │
│     Management Process      │
└─────────────────────────────┘
               │
               ▼
┌─────────────────────────────┐
│      Digest Picture         │──── S10100
│    Generation Process       │
└─────────────────────────────┘
               │
               ▼
┌─────────────────────────────┐
│      Attribute Data         │──── S10200
│    Generation Process       │
└─────────────────────────────┘
               │
               ▼
┌─────────────────────────────┐
│  Attribute Data Storage Process │──── S10300
└─────────────────────────────┘
               │
               ▼
┌─────────────────────────────┐
│      Attribute Data         │──── S10400
│    Registration Process     │
└─────────────────────────────┘
               │
               ▼
┌─────────────────────────────┐
│   Representative Picture    │──── S10500
│      Printing Process       │
└─────────────────────────────┘
               │
               ▼
┌─────────────────────────────┐
│            End              │
└─────────────────────────────┘
```

<table>
<tr><td colspan="2" align="center">**INTERNATIONAL SEARCH REPORT**</td><td colspan="2">International application No.<br>PCT/JP2005/004167</td></tr>
</table>

A. CLASSIFICATION OF SUBJECT MATTER
  Int.Cl⁷  H04N5/91

According to International Patent Classification (IPC) or to both national classification and IPC

B. FIELDS SEARCHED

Minimum documentation searched (classification system followed by classification symbols)
  Int.Cl⁷  H04N5/91

Documentation searched other than minimum documentation to the extent that such documents are included in the fields searched
  Jitsuyo Shinan Koho          1922-1996   Jitsuyo Shinan Toroku Koho   1996-2005
  Kokai Jitsuyo Shinan Koho    1971-2005   Toroku Jitsuyo Shinan Koho   1994-2005

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br><br>Y | JP 2000-299829 A  (Canon Inc.),<br>24 October, 2000 (24.10.00),<br>Par. Nos. [0037] to [0049], [0074];<br>Figs. 8 to 10<br>& US 6704029 B1          & EP 1045316 A2 | 1,2,5,6,10,<br>11,25,27,29<br>3,4,23,24,<br>26,28 |
| Y | JP 08-009310 A  (Matsushita Electric<br>Industrial Co., Ltd.),<br>12 January, 1996 (12.01.96),<br>Par. Nos. [0013] to [0018], [0029] to [0031];<br>Figs. 1, 2, 7<br>(Family: none) | 3,4 |
| Y | JP 07-079404 A  (Hitachi, Ltd.),<br>20 March, 1995 (20.03.95),<br>Par. No. [0020]<br>(Family: none) | 23,26,28 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>  03 June, 2005 (03.06.05) | Date of mailing of the international search report<br>  21 June, 2005 (21.06.05) |
|---|---|
| Name and mailing address of the ISA/<br>  Japanese Patent Office | Authorized officer |
| Facsimile No. | Telephone No. |

Form PCT/ISA/210 (second sheet) (January 2004)

**INTERNATIONAL SEARCH REPORT**

| International application No. |
|---|
| PCT/JP2005/004167 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2003-348528 A  (Nippon Telegraph And Telephone Corp.),<br>05 December, 2003 (05.12.03),<br>Par. No. [0049]; Fig. 6<br>(Family: none) | 24 |
| A | JP 10-224736 A  (Toshiba Corp.),<br>21 August, 1998 (21.08.98),<br>Figs. 1 to 21<br>(Family: none) | 1-29 |
| A | JP 2002-133723 A  (Noritsu Koki Co., Ltd.),<br>10 May, 2002 (10.05.02),<br>Full text; Figs. 1 to 8<br>(Family: none) | 23,26,28 |

Form PCT/ISA/210 (continuation of second sheet) (January 2004)

<table>
<tr><td align="center">**INTERNATIONAL SEARCH REPORT**</td><td>International application No.<br>PCT/JP2005/004167</td></tr>
</table>

| Box No. II | Observations where certain claims were found unsearchable (Continuation of item 2 of first sheet) |
|---|---|

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

| Box No. III | Observations where unity of invention is lacking (Continuation of item 3 of first sheet) |
|---|---|

This International Searching Authority found multiple inventions in this international application, as follows:
Special technical features, excluding the publicly known technology in JP 2000-299829 A, are as follows.
Claims 1-4, 11, 23-29: A point that a frame group is extracted from each scene. Claims 5-6: A point that a frame group is extracted based on comparison between an evaluation value and a prescribed threshold value. Claim 7: A point that a frame group having an evaluation value change rate of 0 or more is extracted by giving priority. Claims 8,9: A point that frame groups at short time intervals are put together. Claim 10: A point that the number of frames of an extracting frame group is set at a prescribed number or more. Claims 12-22: A point that a frame group is   (continued to extra sheet)

1. ☐ As all required additional search fees were timely paid by the applicant, this international search report covers all searchable claims.

2. ☒ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**　　☐ The additional search fees were accompanied by the applicant's protest.

☐ No protest accompanied the payment of additional search fees.

**INTERNATIONAL SEARCH REPORT**

International application No.

PCT/JP2005/004167

Continuation of Box No.III of continuation of first sheet(2)

extracted based on a first image evaluation value and a second evaluation value based on the first evaluation change with time.

Form PCT/ISA/210 (extra sheet) (January 2004)